# EUROPEAN PATENT APPLICATION

(11) **EP 4 848 836 A1**
(43) Date of publication of application: **02.12.2026**
(21) Application number: 25751348.1
(22) Date of filing: 24.01.2025
(51) Int. Cl.: H04W 52/02

(54) **COMMUNICATION METHOD AND APPARATUS**

(30) Priority: 09.02.2024 CN 202410179438
(71) Applicant: Huawei Technologies Co., Ltd., Shenzhen, Guangdong 518129 (CN)
(72) Inventor: LI, Lun, Shenzhen, Guangdong 518129 (CN); GUO, Yanfei, Shenzhen, Guangdong 518129 (CN); WU, Yizhuang, Shenzhen, Guangdong 518129 (CN); LI, He, Shenzhen, Guangdong 518129 (CN)
(74) Representative: Isarpatent
(86) International application number: PCT/CN2025/074785
(87) International publication number: WO 2025/167746

(57) **Abstract**

This application provides a communication method and apparatus, to help reduce energy consumption of an access network device. The method includes: A session management function network element in a network sends a user plane security policy to an access network device in the network, where the user plane security policy corresponds to a session of a terminal device; and when the user plane security policy indicates preferred, the access network device determines, based on energy information corresponding to the terminal device, whether to activate security protection for a data radio bearer of the session, where the energy information indicates energy consumed by the network to transmit data of the terminal device, or the energy information indicates energy efficiency corresponding to transmission of the data of the terminal device by the network.

## Description

### CROSS-REFERENCES TO RELATED APPLICATIONS

This application claims priority to Chinese Patent Application No. 202410179438.4, filed with the China National Intellectual Property Administration on February 9, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An operator may deploy an access network and a core network. After accessing the core network via the access network, terminal devices may transmit data with different entities via access network devices and core network elements. To improve security of data transmission over air interfaces, the terminal devices and the access network devices may perform user plane security protection, such as confidentiality protection and/or integrity protection, on the data. However, performing user plane security protection increases energy consumption of access network devices, increases operating costs of operators, and causes adverse impact on the environment.

### SUMMARY

This application provides a communication method and apparatus, to help reduce energy consumption of an access network device for user plane security protection.

According to a first aspect, an embodiment of this application provides a communication method, including: An access network device in a network receives a user plane security policy from a session management function network element in the network, where the user plane policy corresponds to a session of a terminal device; and when the user plane security policy indicates preferred, the access network device determines, based on energy information corresponding to the terminal device, whether to activate security protection for a data radio bearer of the session, where the energy information corresponding to the terminal device indicates energy consumed by the network to transmit data of the terminal device, or the energy information corresponding to the terminal device indicates energy efficiency corresponding to transmission of data of the terminal device by the network.

Based on the foregoing method, the access network device determines, based on the energy information corresponding to the terminal device, whether to activate security protection for the data radio bearer, so that a decision on whether to activate security protection meets energy consumption or energy efficiency corresponding to transmission of data of the terminal device by the network, thereby avoiding unnecessary security protection and reducing energy consumption of the access network device for user plane security protection.

In a possible design, user plane security protection includes user plane confidentiality (UP confidentiality) and/or user plane integrity protection (UP integrity protection).

In a possible design, the energy information corresponding to the terminal device includes energy information corresponding to the session, the energy consumed by the network to transmit data of the terminal device includes energy consumed by the network to transmit data of the session of the terminal device, and the energy efficiency corresponding to transmission of data of the terminal device by the network includes energy efficiency corresponding to transmission of the data of the session of the terminal device by the network. The energy information corresponding to the session helps more accurately determine whether to activate security protection for the data radio bearer of the session.

In a possible design, the access network device receives the energy information corresponding to the terminal device from a first network element. Such a design helps the access network device quickly determine, based on the energy information corresponding to the terminal device, whether to activate security protection for the data radio bearer of the session.

In a possible design, that the access network device determines, based on the energy information corresponding to the terminal device, whether to activate security protection for the data radio bearer of the session includes: When the energy information corresponding to the terminal device meets a first condition, the access network device determines not to activate security protection for the data radio bearer of the session, where when the energy information corresponding to the terminal device indicates the energy consumed by the network to transmit data of the terminal device, the first condition indicates that a difference between the energy and an energy limit is less than or equal to a first threshold; or when the energy information corresponding to the terminal device indicates the energy consumed by the network to transmit data of the terminal device, the first condition indicates that a ratio of the energy to the energy limit is greater than or equal to a second threshold; or when the energy information corresponding to the terminal device indicates the energy consumed by the network to transmit data of the terminal device, the first condition indicates that the energy is greater than or equal to a third threshold; or when the energy information corresponding to the terminal device indicates the energy efficiency corresponding to transmission of data of the terminal device by the network, the first condition indicates that the energy efficiency is less than or equal to a fourth threshold.

In the foregoing design, when the energy information corresponding to the terminal device meets a specified condition, the access network device determines not to activate security protection for the data radio bearer of the session of the terminal device, so that network energy consumption can be reduced, and energy saving can be implemented. Optionally, the energy limit in the design may be defined in a protocol, or configured by the access network device according to a local policy, or the energy limit is indicated by another network element to the access network device. For example, the access network device may further receive first information from the session management function network element, where the first information indicates the energy limit. This is not limited in embodiments of this application.

According to a second aspect, an embodiment of this application provides a communication method, including: A session management function network element in a network obtains energy information corresponding to a terminal device, where the energy information corresponding to the terminal device indicates energy consumed by the network to transmit data of the terminal device, or the energy information corresponding to the terminal device indicates energy efficiency corresponding to transmission of data of the terminal device by the network; and the session management function network element sends a first message to an access network device in the network based on the energy information corresponding to the terminal device, where the first message is used by the access network device to determine whether to activate security protection for a data radio bearer of a session of the terminal device.

In the foregoing design, the session management function network element triggers, based on the energy information corresponding to the terminal device, the access network device to determine whether to activate security protection for the data radio bearer of the session of the terminal device, for example, triggers the access network device to determine not to activate security protection for the data radio bearer of the session of the terminal device, so that energy consumption of the access network device can be reduced.

In a possible design, before the session management function network element in the network obtains the energy information corresponding to the terminal device, the method further includes: The session management function network element receives a first user plane security policy from a unified data management network element, where the first user plane security policy corresponds to the session of the terminal device; and that the session management function network element sends the first message to the access network device in the network based on the energy information corresponding to the terminal device includes: When the first user plane security policy indicates preferred, the session management function network element sends the first message to the access network device in the network based on the energy information corresponding to the terminal device. When the user plane security policy indicates preferred, the session management function network element triggers, based on the energy information corresponding to the terminal device, the access network device to change security protection for the data radio bearer of the session, thereby reducing energy consumption of the access network device while ensuring data transmission security.

In a possible design, that the session management function network element sends the first message to the access network device in the network based on the energy information includes: When the energy information meets a first condition, the session management function network element sends the first message to the access network device, where the first message is used to determine not to activate security protection for the data radio bearer, where the energy information indicates the energy consumed by the network to transmit data of the terminal device, the first condition indicates that a difference between the consumed energy and an energy limit is less than or equal to a first threshold, and the energy limit indicates a maximum value of the energy used by the network to transmit data of the terminal device; or the energy information indicates the energy consumed by the network to transmit data of the terminal device, and the first condition indicates that a ratio of the consumed energy to the energy limit is greater than or equal to a second threshold; or the energy information indicates the energy consumed by the network to transmit data of the terminal device, and the first condition indicates that the consumed energy is greater than or equal to a third threshold; or the energy information indicates the energy efficiency corresponding to transmission of data of the terminal device by the network, and the first condition indicates that the energy efficiency is less than or equal to a fourth threshold. In the foregoing design, when determining that the energy information corresponding to the terminal device meets a specified condition, the session management function network element indicates the access network device not to activate security protection for the data radio bearer of the session of the terminal device, so that network energy consumption can be reduced, and energy saving can be implemented.

In a possible design, the first message includes a second user plane security policy corresponding to the session. The second user plane security policy indicates not needed, which may also be replaced with the description that the second user plane security policy indicates that security protection corresponding to the session does not need to be activated. Security protection corresponding to the session may also be replaced with user plane security protection corresponding to the session, including security protection for the data radio bearer of the session. In this design, the session management function network element changes the user plane security policy to trigger the access network device to change security protection for the data radio bearer of the session, so that energy consumption and indication overheads of the access network device can be reduced.

In a possible design, before sending the first message carrying the second user plane security policy, the session management function network element determines that security protection for the data radio bearer of the session is activated. Sending such a simple indication as the second user plane security policy may trigger the access network device to de-activate security protection for the data radio bearer of the session, so that energy consumption and indication overheads of the access network device can be reduced.

In a possible design, the first message includes the first user plane security policy and third information, the third information indicates that the energy information corresponding to the terminal device meets the first condition, the first user plane security policy is from the unified data management network element, and the first user plane security policy corresponds to the session of the terminal device. In this design, the session management function network element does not change the user plane security policy, and triggers, by using the information indicating that the energy information corresponding to the terminal device meets the first condition, the access network device to change security protection for the data radio bearer of the session, so that energy consumption and indication overheads of the access network device can be reduced.

In a possible design, the energy information corresponding to the terminal device includes energy information corresponding to the session, the energy consumed by the network to transmit data of the terminal device includes energy consumed by the network to transmit data of the session of the terminal device, and the energy efficiency corresponding to transmission of data of the terminal device by the network includes energy efficiency corresponding to transmission of the data of the session of the terminal device by the network.

According to a third aspect, an embodiment of this application provides a communication method, including: An access network device receives a first message from a session management function network element, where the first message includes a first user plane security policy and third information, the first user plane security policy corresponds to a session of a terminal device, the first user plane security policy indicates preferred, and the third information indicates that energy information corresponding to the terminal device meets a first condition; and the access network device determines, based on the first message, not to activate security protection for a data radio bearer of the session of the terminal device. In this design, when the user plane policy indicates preferred, the access network device can quickly determine not to activate security protection for the data radio bearer of the session without analysis and calculation, so that energy consumption of the access network device can be reduced while data transmission security is ensured.

According to a fourth aspect, an embodiment of this application provides a communication method, including: A session management function network element in a network determines that the network serves a terminal device in an energy-saving mode; and the session management function network element sends a first message to an access network device in the network, where the first message is used by the access network device to determine not to activate security protection for a data radio bearer of a session of the terminal device. That the network serves the terminal device in the energy-saving mode may also be replaced with the description that a mode in which the network serves the terminal device is the energy-saving mode. When the network serves the terminal device in the energy-saving mode, the session management function network element triggers, by using a simple indication, the access network device not to activate security protection for the data radio bearer of the session of the terminal device, so that energy consumption and indication overheads of the network can be reduced.

In a possible design, that the session management function network element in the network determines that the network serves the terminal device in the energy-saving mode includes: The session management function network element receives fourth information, and determines, based on the fourth information, that the network serves the terminal device in the energy-saving mode, where the fourth information indicates a network slice to enter an energy-saving state, and the network slice includes the session of the terminal device; or the fourth information indicates the session management function network element to enter an energy-saving state, and a session managed by the session management function network element includes the session of the terminal device; or the fourth information indicates the access network device to enter an energy-saving state, and the access network device serves the terminal device.

In a possible design, the first message includes a user plane security policy corresponding to the session of the terminal device and fifth information, the user plane security policy indicates preferred, and the fifth information indicates that the network serves the terminal device in the energy-saving mode.

According to a fifth aspect, an embodiment of this application provides a communication method, including: An access network device in a network determines that the network serves a terminal device in an energy-saving mode; and when a user plane security policy corresponding to a session of the terminal device indicates preferred, the access network device determines not to activate security protection for a data radio bearer of the session. That the network serves the terminal device in the energy-saving mode may also be replaced with the description that a mode in which the network serves the terminal device is the energy-saving mode. When the network serves the terminal device in the energy-saving mode, the access network device independently determines not to activate security protection for the data radio bearer of the session of the terminal device, so that energy consumption of the network can be reduced.

In a possible design, that the access network device in the network determines that the network serves the terminal device in the energy-saving mode includes: The access network device receives fourth information, and determines, based on the fourth information, that the network serves the terminal device in the energy-saving mode, where the fourth information indicates a network slice to enter an energy-saving state, and the network slice includes the session of the terminal device; or the fourth information indicates a session management function network element to enter an energy-saving state, and a session managed by the session management function network element includes the session of the terminal device; or the fourth information indicates the access network device to enter an energy-saving state, and the access network device serves the terminal device.

According to a sixth aspect, an embodiment of this application provides a communication apparatus. The communication apparatus may be an access network device, or may be an apparatus, a module, a chip, or the like in the access network device, or may be an apparatus that can be used in conjunction with the access network device. In a design, the communication apparatus may include modules that are in one-to-one correspondence with the methods/operations/steps/actions described in the first aspect. The module may be implemented by a hardware circuit, software, or a combination of the hardware circuit and the software. In a design, the communication apparatus may include a processing module and a communication module. The communication module includes a sending unit and a receiving unit. Optionally, the processing module may be replaced with a processing unit.

The communication module is configured to receive a user plane security policy from a session management function network element in a network, where the user plane policy corresponds to a session of a terminal device. The processing module is configured to: when the user plane security policy indicates preferred, determine, based on energy information corresponding to the terminal device, whether to activate security protection for a data radio bearer of the session, where the energy information corresponding to the terminal device indicates energy consumed by the network to transmit data of the terminal device, or the energy information corresponding to the terminal device indicates energy efficiency corresponding to transmission of data of the terminal device by the network.

In a possible design, user plane security protection includes user plane confidentiality (UP confidentiality) and/or user plane integrity protection (UP integrity protection).

In a possible design, the energy information corresponding to the terminal device includes energy information corresponding to the session, the energy consumed by the network to transmit data of the terminal device includes energy consumed by the network to transmit data of the session of the terminal device, and the energy efficiency corresponding to transmission of data of the terminal device by the network includes energy efficiency corresponding to transmission of the data of the session of the terminal device by the network.

In a possible design, the communication module is further configured to receive the energy information corresponding to the terminal device from a first network element.

In a possible design, the processing module is specifically configured to: when the energy information corresponding to the terminal device meets a first condition, determine not to activate security protection for the data radio bearer of the session, where when the energy information corresponding to the terminal device indicates the energy consumed by the network to transmit data of the terminal device, the first condition indicates that a difference between the energy and an energy limit is less than or equal to a first threshold; or when the energy information corresponding to the terminal device indicates the energy consumed by the network to transmit data of the terminal device, the first condition indicates that a ratio of the energy to the energy limit is greater than or equal to a second threshold; or when the energy information corresponding to the terminal device indicates the energy consumed by the network to transmit data of the terminal device, the first condition indicates that the energy is greater than or equal to a third threshold; or when the energy information corresponding to the terminal device indicates the energy efficiency corresponding to transmission of data of the terminal device by the network, the first condition indicates that the energy efficiency is less than or equal to a fourth threshold.

Optionally, the energy limit in the design may be defined in a protocol, or configured by the access network device according to a local policy, or the energy limit is indicated by another network element to the access network device. For example, the access network device may further receive first information from the session management function network element, where the first information indicates the energy limit. This is not limited in embodiments of this application.

According to a seventh aspect, an embodiment of this application provides a communication apparatus. The communication apparatus may be a session management function network element, or may be an apparatus, a module, a chip, or the like in the session management function network element, or may be an apparatus that can be used in conjunction with the session management function network element. In a design, the communication apparatus may include modules that are in one-to-one correspondence with the methods/operations/steps/actions described in the second aspect. The module may be implemented by a hardware circuit, software, or a combination of the hardware circuit and the software. In a design, the communication apparatus may include a processing module and a communication module. The communication module includes a sending unit and a receiving unit. Optionally, the processing module may be replaced with a processing unit.

The communication module is configured to obtain energy information corresponding to a terminal device, where the energy information corresponding to the terminal device indicates energy consumed by the network to transmit data of the terminal device, or the energy information corresponding to the terminal device indicates energy efficiency corresponding to transmission of data of the terminal device by the network. The processing module is configured to send a first message to an access network device in the network via the communication module based on the energy information corresponding to the terminal device, where the first message is used by the access network device to determine whether to activate security protection for a data radio bearer of a session of the terminal device.

In a possible design, the communication module is further configured to: before obtaining the energy information corresponding to the terminal device, receive a first user plane security policy from a unified data management network element, where the first user plane security policy corresponds to the session of the terminal device. The processing module is specifically configured to: when the first user plane security policy indicates preferred, send the first message to the access network device in the network via the communication module based on the energy information corresponding to the terminal device.

In a possible design, the processing module is specifically configured to: when the energy information meets a first condition, send the first message to the access network device via the communication module, where the first message is used to determine not to activate security protection for the data radio bearer, where the energy information indicates the energy consumed by the network to transmit data of the terminal device, the first condition indicates that a difference between the consumed energy and an energy limit is less than or equal to a first threshold, and the energy limit indicates a maximum value of the energy used by the network to transmit data of the terminal device; or the energy information indicates the energy consumed by the network to transmit data of the terminal device, and the first condition indicates that a ratio of the consumed energy to the energy limit is greater than or equal to a second threshold; or the energy information indicates the energy consumed by the network to transmit data of the terminal device, and the first condition indicates that the consumed energy is greater than or equal to a third threshold; or the energy information indicates the energy efficiency corresponding to transmission of data of the terminal device by the network, and the first condition indicates that the energy efficiency is less than or equal to a fourth threshold.

In a possible design, the first message includes a second user plane security policy corresponding to the session. The second user plane security policy indicates not needed, which may also be replaced with the description that the second user plane security policy indicates that security protection corresponding to the session does not need to be activated. Security protection corresponding to the session may also be replaced with user plane security protection corresponding to the session, including security protection for the data radio bearer of the session.

In a possible design, before the communication module sends the first message carrying the second user plane security policy, the processing module is further configured to determine that security protection for the data radio bearer of the session is activated.

In a possible design, the first message includes the first user plane security policy and third information, the third information indicates that the energy information corresponding to the terminal device meets the first condition, the first user plane security policy is from the unified data management network element, and the first user plane security policy corresponds to the session of the terminal device.

In a possible design, the energy information corresponding to the terminal device includes energy information corresponding to the session, the energy consumed by the network to transmit data of the terminal device includes energy consumed by the network to transmit data of the session of the terminal device, and the energy efficiency corresponding to transmission of data of the terminal device by the network includes energy efficiency corresponding to transmission of the data of the session of the terminal device by the network.

According to an eighth aspect, an embodiment of this application provides a communication method. The communication apparatus may be an access network device, or may be an apparatus, a module, a chip, or the like in the access network device, or may be an apparatus that can be used in conjunction with the access network device. In a design, the communication apparatus may include modules that are in one-to-one correspondence with the methods/operations/steps/actions described in the third aspect. The module may be implemented by a hardware circuit, software, or a combination of the hardware circuit and the software. In a design, the communication apparatus may include a processing module and a communication module. The communication module includes a sending unit and a receiving unit. Optionally, the processing module may be replaced with a processing unit.

The communication module is configured to receive a first message from a session management function network element, where the first message includes a first user plane security policy and third information, the first user plane security policy corresponds to a session of a terminal device, the first user plane security policy indicates preferred, and the third information indicates that energy information corresponding to the terminal device meets a first condition. The processing module is configured to determine, based on the first message, not to activate security protection for a data radio bearer of the session of the terminal device.

According to a ninth aspect, an embodiment of this application provides a communication apparatus. The communication apparatus may be a session management function network element, or may be an apparatus, a module, a chip, or the like in the session management function network element, or may be an apparatus that can be used in conjunction with the session management function network element. In a design, the communication apparatus may include modules that are in one-to-one correspondence with the methods/operations/steps/actions described in the fourth aspect. The module may be implemented by a hardware circuit, software, or a combination of the hardware circuit and the software. In a design, the communication apparatus may include a processing module and a communication module. The communication module includes a sending unit and a receiving unit. Optionally, the processing module may be replaced with a processing unit.

The processing module is configured to determine that a network serves a terminal device in an energy-saving mode. The communication module is configured to send a first message to an access network device in the network, where the first message is used by the access network device to determine not to activate security protection for a data radio bearer of a session of the terminal device.

In a possible design, the communication module is further configured to receive fourth information. The processing module is further configured to determine, based on the fourth information, that the network serves the terminal device in the energy-saving mode, where the fourth information indicates a network slice to enter an energy-saving state, and the network slice includes the session of the terminal device; or the fourth information indicates the session management function network element to enter an energy-saving state, and a session managed by the session management function network element includes the session of the terminal device; or the fourth information indicates the access network device to enter an energy-saving state, and the access network device serves the terminal device.

In a possible design, the first message includes a user plane security policy corresponding to the session of the terminal device and fifth information, the user plane security policy indicates preferred, and the fifth information indicates that the network serves the terminal device in the energy-saving mode.

According to a tenth aspect, an embodiment of this application provides a communication apparatus. The communication apparatus may be an access network device, or may be an apparatus, a module, a chip, or the like in the access network device, or may be an apparatus that can be used in conjunction with the access network device. In a design, the communication apparatus may include modules that are in one-to-one correspondence with the methods/operations/steps/actions described in the fifth aspect. The module may be implemented by a hardware circuit, software, or a combination of the hardware circuit and the software. In a design, the communication apparatus may include a processing module and a communication module. The communication module includes a sending unit and a receiving unit. Optionally, the processing module may be replaced with a processing unit.

The processing module is configured to determine that a network serves a terminal device in an energy-saving mode; and when a user plane security policy corresponding to a session of the terminal device indicates preferred, determine not to activate security protection for a data radio bearer of the session.

In a possible design, the communication module is further configured to receive fourth information. The processing module is further configured to determine, based on the fourth information, that the network serves the terminal device in the energy-saving mode, where the fourth information indicates a network slice to enter an energy-saving state, and the network slice includes the session of the terminal device; or the fourth information indicates a session management function network element to enter an energy-saving state, and a session managed by the session management function network element includes the session of the terminal device; or the fourth information indicates the access network device to enter an energy-saving state, and the access network device serves the terminal device.

According to an eleventh aspect, an embodiment of this application provides a communication apparatus. The communication apparatus includes a processor, configured to implement the method described in any one of the first aspect to the fifth aspect. The processor is coupled to a memory, and the memory is configured to store instructions and data. When executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a twelfth aspect, an embodiment of this application provides a communication apparatus, including a logic circuit and an interface circuit. The interface circuit is configured to communicate with a module outside the communication apparatus, and the logic circuit is configured to execute a computer program, to enable the communication apparatus to perform the method provided in any one of the first aspect to the fifth aspect.

According to a thirteenth aspect, an embodiment of this application provides a communication method, applied to a communication system including a session management function network element and an access network device.

In a possible design, the communication method includes: The session management function network element in a network sends a user plane security policy to the access network device in the network, where the user plane policy corresponds to a session of a terminal device; the access network device receives the user plane security policy from the session management function network element; and when the user plane security policy indicates preferred, the access network device determines, based on energy information corresponding to the terminal device, whether to activate security protection for a data radio bearer of the session, where the energy information corresponding to the terminal device indicates energy consumed by the network to transmit data of the terminal device, or the energy information corresponding to the terminal device indicates energy efficiency corresponding to transmission of data of the terminal device by the network.

In a possible design, the communication method includes: The session management function network element in a network obtains energy information corresponding to a terminal device, where the energy information corresponding to the terminal device indicates energy consumed by the network to transmit data of the terminal device, or the energy information corresponding to the terminal device indicates energy efficiency corresponding to transmission of data of the terminal device by the network; and the session management function network element sends a first message to the access network device in the network based on the energy information corresponding to the terminal device, where the first message is used by the access network device to determine whether to activate security protection for a data radio bearer of a session of the terminal device.

In a possible design, the communication method includes: The session management function network element in a network determines that the network serves a terminal device in an energy-saving mode; and the session management function network element sends a first message to the access network device in the network, where the first message is used by the access network device to determine not to activate security protection for a data radio bearer of a session of the terminal device.

According to a fourteenth aspect, an embodiment of this application provides a communication system, including an access network device and a session management function network element.

In a possible design, the access network device is configured to implement the method described in any one of the first aspect or the possible designs of the first aspect, and the session management function network element is configured to send a user plane security policy to the access network device.

In another possible design, the session management function network element is configured to implement the method described in any one of the second aspect or the possible designs of the second aspect, and the access network device is configured to implement the method described in any one of the third aspect or the possible designs of the third aspect.

In another possible design, the session management function network element is configured to implement the methods described in any one of the second aspect or the possible designs of the second aspect, and any one of the fourth aspect or the possible designs of the fourth aspect, and the access network device is configured to implement the method described in any one of the third aspect or the possible designs of the third aspect.

In a possible design, the access network device is configured to implement the method described in any one of the fifth aspect or the possible designs of the fifth aspect, and the session management function network element is configured to send a user plane security policy to the access network device.

According to a fifteenth aspect, an embodiment of this application further provides a computer program. When the computer program runs on a computer, the computer is caused to perform the method provided in any one of the first aspect to the fifth aspect.

According to a sixteenth aspect, an embodiment of this application further provides a computer program product, including instructions. When the instructions are run on a computer, the computer is caused to perform the method provided in any one of the first aspect to the fifth aspect.

According to a seventeenth aspect, an embodiment of this application further provides a computer-readable storage medium. The computer-readable storage medium stores a computer program or instructions. When the computer program or the instructions are run on a computer, the computer is caused to perform the method provided in any one of the first aspect to the fifth aspect.

According to an eighteenth aspect, an embodiment of this application further provides a chip. The chip is configured to read a computer program stored in a memory, to perform the method provided in any one of the first aspect to the fifth aspect.

According to a nineteenth aspect, an embodiment of this application further provides a chip system. The chip system includes a processor, configured to support a computer apparatus in implementing the method provided in any one of the first aspect to the fifth aspect. In a possible design, the chip system further includes a memory, and the memory is configured to store a program and data that are necessary for the computer apparatus. The chip system may include a chip, or may include a chip and another discrete component.

For effects of the solutions provided in any one of the sixth aspect to the nineteenth aspect, refer to the corresponding descriptions in the first aspect to the fifth aspect.

### BRIEF DESCRIPTION OF DRAWINGS

FIG. 1 is a diagram of an architecture of a communication system according to an embodiment of this application;
FIG. 2 is a diagram of a network architecture according to an embodiment of this application;
FIG. 3 to FIG. 7 are schematic flowcharts of several communication methods according to embodiments of this application;
FIG. 8 is one of diagrams of a structure of a communication apparatus according to an embodiment of this application; and
FIG. 9 is one of diagrams of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

At least one piece (item) in embodiments of this application indicates one or more pieces (items). "A plurality of pieces (items)" mean two or more pieces (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in embodiments of this application to describe objects, these objects should not be limited by these terms. These terms are merely used for distinguishing the objects from each other.

The terms "include", "have", and any variants thereof in the following descriptions of embodiments of this application are intended to cover non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the term such as "example" or "for example" is used to represent giving an example, an illustration, or descriptions. Any method or design solution described as an "example" or "for example" in embodiments of this application should not be explained as being more preferred or having more advantages than another method or design solution. Exactly, use of the word "example", "for example", or the like is intended to present a related concept in a specific manner.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may send signals to each other. In other words, both a signal sending network element and a signal receiving network element may be terminal devices.

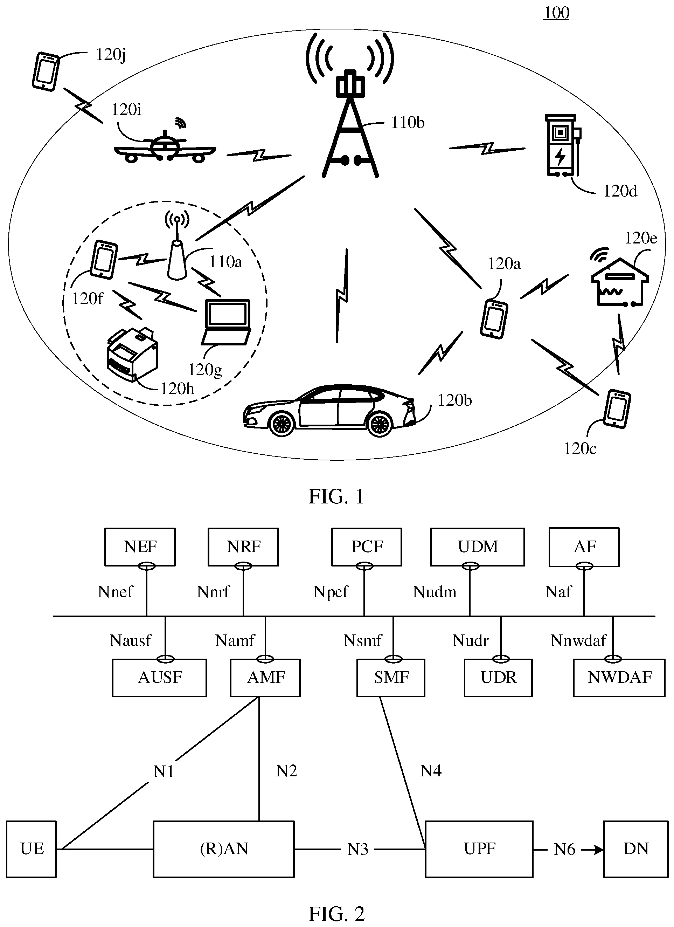

A communication method provided in embodiments of this application may be applied to a wireless communication system like 5G, 6G, or satellite communication. FIG. 1 is a simplified diagram of a wireless communication system according to an embodiment of this application. As shown in FIG. 1, the wireless communication system includes a radio access network 100. The radio access network 100 may be a next generation (for example, 6G or higher version) radio access network, or a conventional (for example, 5G, 4G, 3G, or 2G) radio access network. One or more communication devices (120a to 120j, which are collectively referred to as 120) may be interconnected or connected to one or more access network devices (110a and 110b, which are collectively referred to as 110) in the radio access network 100.

Optionally, in actual application, the wireless communication system may include a plurality of access network devices (also referred to as network devices), and may also include a plurality of communication devices. One access network device may serve one or more communication devices simultaneously. One communication device may also access one or more access network devices simultaneously. Quantities of communication devices and access network devices included in the wireless communication system are not limited in embodiments of this application.

The access network device may be an entity that is configured to transmit or receive a signal on a network side. The access network device may be an access device via which the communication device accesses the wireless communication system in a wireless manner. For example, the access network device may be a base station. The base station may cover various names in the following in a broad sense, or may be replaced with the following names, for example, a radio access network (radio access network, RAN) device, a RAN node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmitting and receiving point, TRP), a transmission point (transmitting point, TP), a master eNodeB MeNB, a secondary eNodeB SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the access network device may be a communication module, a modem, or a chip disposed in the foregoing device or apparatus. Alternatively, the access network device may be a mobile switching center, a device that functions as a base station in device-to-device (Device-to-Device, D2D) communication, vehicle-to-everything (vehicle-to-everything, V2X) communication, and machine-to-machine (machine-to-machine, M2M) communication, a network side device in a 6G network, a device that functions as a base station in a future communication system, or the like. The access network device may support networks using a same access technology or different access technologies. A specific technology and a specific device form that are used by the access network device are not limited in embodiments of this application.

In some deployments, the gNB may include a central unit (central unit, CU) and a distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may include one or more of a CU node, a DU node, or an AAU node. In addition, the CU may be classified as an access network device in an access network, or the CU may be classified as an access network device in a CN. This is not limited in this application.

The access network device may be fixed or mobile. For example, the base stations 110a and 110b are stationary and are responsible for wireless transmission and reception in one or more cells from the communication device 120. A helicopter or an uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In embodiments of this application, a communication apparatus configured to implement functions of the access network may be an access network device, or may be an access network device having some functions of the access network, or may be an apparatus that can support implementing the functions of the access network, such as a chip system, a hardware circuit, a software module, or a hardware circuit plus a software module. The apparatus may be installed in the access network device or used in conjunction with the access network device. In the method in embodiments of this application, an example in which the communication apparatus configured to implement the functions of the access network device is an access network device or a RAN device is used for description.

The communication device may be an entity, such as a mobile phone, configured to receive or transmit a signal on a user side. The communication device may be configured to connect a person, an object, and a machine. The communication device may communicate with one or more core networks via the access network device. The communication device includes a handheld device having a wireless connection function, another processing device connected to a wireless modem, a vehicle-mounted device, or the like. The communication device may be a portable, pocket-sized, handheld, computer built-in, or on-board mobile apparatus. The communication device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, self-driving, telemedicine, smart grid, smart furniture, smart office, smart wearable, smart transportation, smart city, uncrewed aerial vehicle, robot, remote sensing, passive sensing, positioning, navigation and tracking, and autonomous delivery and mobility. Some examples of the communication device 120 are a 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in smart grid (smart grid), a wireless terminal in transportation safety (transportation safety), a wireless terminal such as a smart fueler in smart city (smart city), a terminal device on high-speed railway, and a wireless terminal such as a smart speaker, a smart coffee machine, and a smart printer in smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, a user equipment (user equipment, UE), a mobile station (mobile station, MS), or a mobile terminal (mobile terminal, MT). Alternatively, the communication device may be a communication device in a future wireless communication system. The communication device may be used in a dedicated network device or a general-purpose device. A specific technology and a specific device form that are used by the communication device are not limited in embodiments of this application.

Optionally, the communication device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In embodiments of this application, a communication apparatus configured to implement functions of the communication device may be a terminal device, or may be a terminal device having some functions of the communication device, or may be an apparatus that can support implementing the functions of the communication device, such as a chip system. The apparatus may be installed in the terminal device or used in conjunction with the terminal device. In embodiments of this application, the chip system may include a chip, or may include a chip and another discrete component. In the technical solutions provided in embodiments of this application, an example in which the communication apparatus is a terminal device or a UE is used for description.

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

Data transmission between the access network device and the terminal device is used as an example. Data transmission needs to pass through user plane protocol layers, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer, then the MAC layer generates a transport block, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

It should be understood that quantities and types of devices in the communication system shown in FIG. 1 are merely used as an example, and embodiments of this application are not limited thereto. In actual application, the communication system may further include more terminal devices and more access network devices, and may further include another network element, for example, may include a core network device, a network management system, and/or a network element configured to implement an artificial intelligence function. The network management system may also be referred to as an operation, administration and maintenance (operation, administration and maintenance, OAM) network element, OAM for short. Operation is mainly to analyze, forecast, plan, and configure routine network and services. Maintenance mainly refers to routine operation activities such as network and service testing and fault management. The network management system can detect a network running status, optimize network connections and performance, improve network running stability, and reduce network maintenance costs.

For ease of understanding, FIG. 2 shows a network architecture to which a communication method is applicable according to an embodiment of this application. The network architecture may include an access network and a core network, and a terminal device accesses a data network (data network, DN) by using an access network and a core network.

For a definition and an example of the terminal device, refer to the descriptions of the terminal device in the communication system shown in FIG. 1 for understanding. Details are not described again in embodiments of this application. The access network is used to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include the access network device shown in FIG. 1. The access network device provides an access service for the terminal device. For example, the access network device may be responsible for functions such as radio resource management, quality of service (quality of service, QoS) management, and data compression and encryption on an air interface side.

The core network is responsible for maintaining subscription data of a mobile network, and provides session management, mobility management, policy management, security authentication, and other functions for the terminal device. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network data analytics function network element (Network Data Analytics Function, NWDAF) network element.

The access and mobility management function network element is mainly responsible for mobility management in a mobile network, for example, user location update, user registration with a network, user switching, allocation of a temporary user identity, and user authentication and authorization. In 5G, the access and mobility management function network element may be the AMF network element. In future communication such as 6th generation (the 6th generation, 6G), the mobility management network element may still be the AMF network element, or may have another name. This is not limited in this application.

The session management function network element is responsible for managing a protocol data unit (protocol data unit, PDU) session of the terminal device. The PDU session is a channel used for transmitting a PDU, and the terminal device and the DN need to transmit PDUs to each other through the PDU session. The SMF network element is responsible for establishment, maintenance, deletion, and the like of the PDU session. The session management function network element includes session-related functions such as session management (for example, session establishment, modification, and release, including tunnel maintenance between a user plane network element and the access network device), selection and control of the user plane network element, service and session continuity (service and session continuity, SSC) mode selection, and roaming. In 5G, the session management function network element may be the SMF network element. In future communication such as 6G, the session management function network element may still be the SMF network element, or may have another name. This is not limited in this application.

The user plane function network element is a gateway for communication between a mobile network and a data network (data network, DN), and is mainly responsible for forwarding and receiving user data. For example, the user plane function network element may receive the user data from the data network, and transmit the user data to the UE via the access network device; and may also receive the user data from the UE via the access network device, and forward the user data to the data network. In addition, the user plane function network element further includes user plane-related functions such as data packet detection, traffic usage reporting, quality of service (quality of service, QoS) handling, lawful interception, uplink data packet detection, and downlink data packet storage. In 5G, the user plane function network element may be the UPF network element. In future communication such as 6G, the user plane function network element may still be the UPF network element, or may have another name. This is not limited in this application.

The unified data management network element is responsible for storing information such as a subscriber permanent identifier (subscriber permanent identifier, SUPI), a credential (credential), a security context (security context), and subscription information of a subscriber. The information stored in the unified data management network element may be used for authentication and authorization for accessing the mobile network by the terminal device. The foregoing subscriber may be specifically a user using a service provided by the mobile network, for example, a user using a mobile phone SIM card of China Telecom or a user using a mobile phone SIM card of China Mobile. The subscriber permanent identifier (subscriber permanent identifier, SUPI) of the subscriber may be a number of the mobile phone SIM card or the like. The credential and the security context of the subscriber may be stored small files such as an encryption key of the mobile phone SIM card or information related to encryption of the mobile phone SIM card, and are used for authentication and/or authorization. The security context may be data (cookie), a token (token), or the like stored in a local terminal (for example, a mobile phone) of the user. The subscription data of the subscriber may be a supporting service of the mobile phone SIM card, for example, a traffic package or a used network of the mobile phone SIM card. It should be noted that, for ease of description, information such as the permanent identifier, the credential, a security context, authentication data (cookie), and a token related to authentication and authorization is not distinguished or limited in this application document. Unless otherwise specified, the security context is used as an example for description in embodiments of this application. However, embodiments of this application are also applicable to authentication and/or authorization information described in another manner. In 5G, the unified data management network element may be the UDM network element. In future communication such as 6G, the unified data management network element may still be the UDM network element, or may have another name. This is not limited in this application.

The network exposure network element securely exposes an external interface of the mobile network to a third party. When the session management function network element needs to communicate with a third-party network element, the network exposure network element may serve as a relay for communication between the session management function network element and the third-party network element. When the network exposure network element serves as the relay, the network exposure network element may translate identification information of the subscriber and identification information of the third-party network element. For example, when sending a SUPI of the subscriber from the mobile network to the third party, the network exposure network element may translate the SUPI into an external identity (identity, ID) corresponding to the SUPI. On the contrary, when sending the external ID (a network element ID of the third party) to the mobile network, the network exposure network element may translate the external ID into the SUPI. In 5G, the network exposure network element may be the NEF network element. In future communication such as 6G, the network exposure network element may still be the NEF network element, or may have another name. This is not limited in this application.

The application function network element is configured to transfer a requirement of an application side for a network side, for example, a QoS requirement or a user status event subscription. The application function network element may be a third-party functional entity, or may be an operator-deployed application server, for example, an IP multimedia subsystem (IP multimedia subsystem, IMS) voice call service. In 5G, the application function network element may be the AF network element. In future communication such as 6G, the application function network element may still be the AF network element, or may have another name. This is not limited in this application.

The policy control network element is configured to provide a policy of the PDU session for the session management function network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

The network data analytics function network element may provide network data collection and analytics functions and the like based on technologies such as big data and artificial intelligence. In 5G, the network data analytics function network element may be the NWDAF network element. In future communication such as 6G, the network data analytics function network element may still be the NWDAF network element, or may have another name. This is not limited in this application.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, a UDM, a UDR, a PCF, an SMF, an AMF, an NRF, an AUSF, a NEF, a UPF, and an NWDAF for short, as shown in FIG. 1.

In FIG. 2, Nausf, Nnef, Nnrf, Namf, Npcf, Nsmf, Nudm, Nudr, Naf, and Nnwdaf are service-based interfaces provided by the AUSF, the NEF, the NRF, the AMF, the PCF, the SMF, the UDM, the UDR, the AF, and the NWDAF respectively, and are configured to invoke corresponding service-based operations. N1, N2, N3, N4, and N6 are interface sequence numbers. Meanings of the interface sequence numbers are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information and the like from a core network side to the access network device.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF and the DN, and is configured to transfer uplink and downlink user data flows between the UPF and the DN.

It may be understood that one or more of the terminal device, the access network device, or the core network device may be a network element in a hardware device, or may be a software function running on dedicated hardware (for example, a dedicated processor or a general-purpose processor), or all or some functions implemented by these devices may be virtualized. For example, functions of one or more of the virtualized terminal device, the virtualized access network device, or the virtualized core network device may be implemented by a cloud device, for example, a cloud device in an over the top (over the top, OTT) system. Because the terminal device and the access network device are related to an air interface transmission interface, receiving and sending functions of the interface may be implemented by hardware.

The following describes technical terms in embodiments of this application in detail.

### (1) User plane security policy (UP security policy)

The UP security policy is used to control user plane security protection for a DRB of a session of a terminal device. Currently, there are the following three types of UP security policies: The UP security policy indicates required (required), that is, indicates that security protection for the DRB of the session of the terminal device needs to be activated. The UP security policy indicates not needed (not needed), that is, indicates that security protection for the DRB of the session of the terminal device does not need to be activated. The UP security policy indicates preferred (preferred), that is, indicates that it is preferred to activate security protection for the DRB of the session of the terminal device or it is preferred not to activate security protection for the DRB of the session of the terminal device. For example, the session is a PDU session. Security protection for a DRB of the PDU session includes UP confidentiality and/or UP integrity protection.

Generally, an SMF may provide, for an access network device in a PDU session establishment procedure, a UP security policy corresponding to the PDU session of the terminal device. The access network device determines, according to the received UP security policy, whether to activate user plane security protection for the DRB belonging to the PDU session. For example, when the UP security policy indicates required (required), the access network device activates user plane security protection for the DRB of the PDU session; or when the UP security policy indicates required, but the access network device cannot activate user plane security protection for the DRB of the PDU session, the access network device should reject establishment of a user plane resource for the PDU session and indicate a rejection cause to the SMF; or when the UP security policy indicates not needed (not needed), the access network device does not activate user plane security protection for the DRB of the PDU session; or when the UP security policy indicates preferred, the access network device may determine, according to a local policy, whether to activate user plane security protection for the DRB of the PDU session; or when the UP security policy indicates preferred, the access network device may dynamically change activation or de-activation of user plane security protection for the DRB of the PDU session. Optionally, in embodiments of this application, "activate" (activate) may also be replaced with "enable", "not activate" may also be replaced with "not enable", and "de-activate" (de-activate) may also be replaced with "disable".

When the UP security policy is configured in subscription information of the session of the terminal device, the SMF may obtain the subscription information of the session of the terminal device from a UDM to obtain the UP security policy. When the UP security policy is not configured in the subscription information of the session of the terminal device, the SMF may configure, based on a granularity such as a data network, a network slice, or an access network device, a same user plane security policy for all sessions corresponding to a same granularity.

### (2) Energy information

The energy information may also be replaced with energy data, an energy parameter, power information, another name, or the like. In embodiments of this application, the energy information is used as an example for description. The energy information may be energy consumption information (or referred to as energy consumption), and indicates energy consumed by a network to transmit data of the terminal device, for example, energy consumed by the network to transmit data of the session of the terminal device. Alternatively, the energy information may be energy efficiency information, and indicates energy efficiency corresponding to transmission of data of the terminal device by the network, for example, energy efficiency corresponding to transmission of the data of the session of the terminal device by the network. It may be understood that for transmitting data of a same data volume by the network, higher energy efficiency indicates less energy consumed, or lower energy efficiency indicates more energy consumed.

The energy may be electrical energy, and a unit of the electrical energy may be kilowatt/hour (kw/h), watt/hour (w/h), joule, or the like. Alternatively, the energy is related to renewable energy, for example, carbon emission data or an amount of green energy. This is not limited in embodiments of this application.

In some possible designs, an energy limit (or referred to as an energy consumption quota) may be separately configured for a plurality of granularities. For example, an energy limit of a network slice is configured for the network slice, and indicates a maximum value of energy that is allowed to be consumed by the network slice; an energy limit (or referred to as an energy consumption quota) of a terminal device is configured for the single terminal device, and indicates a maximum value of energy that is allowed to be consumed by the network to transmit data of the terminal device; or an energy limit of a session is configured for the single session of the terminal device, and indicates a maximum value of energy that is allowed to be consumed by the network to transmit data of the session of the terminal device.

In embodiments of this application, in a process of controlling user plane security protection for the network side, the energy information corresponding to the terminal device is considered, to reduce network energy consumption and implement energy saving. The following further provides detailed descriptions with reference to specific solutions.

### Solution 1

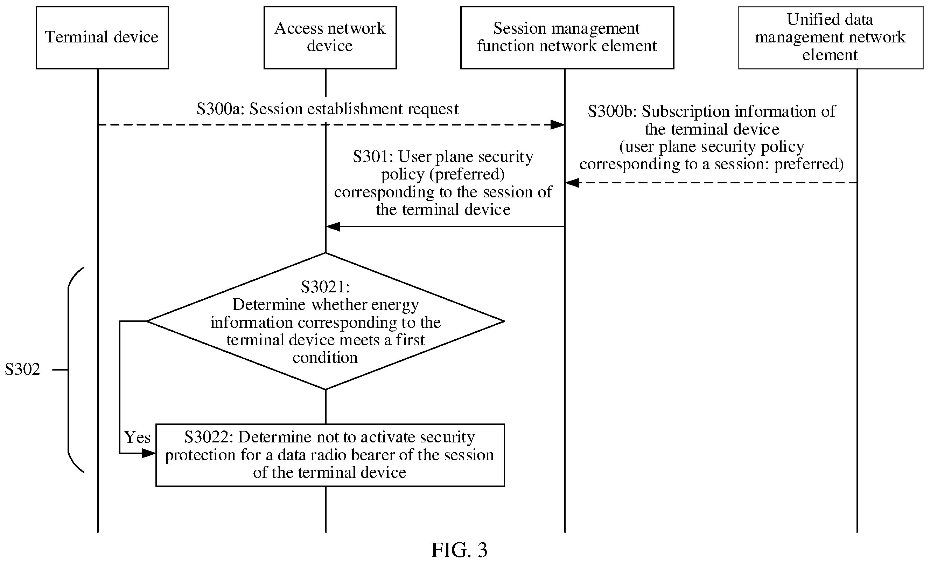

FIG. 3 shows a communication method. The method mainly includes the following steps.

S301: A session management function network element sends a user plane security policy corresponding to a session of a terminal device to an access network device.

The user plane security policy corresponding to the session indicates preferred (preferred). Alternatively, a user plane security policy indication a may be newly added based on the user plane security policy indicating required, not needed, or preferred. For example, the newly added user plane security policy indication a may indicate preferred according to an energy state (preferred according to energy state). Based on this, the user plane security policy corresponding to the session indicates preferred according to the energy state, to indicate that it is preferred to activate security protection for a DRB of the session of the terminal device based on energy or it is preferred not to activate security protection for the DRB of the session of the terminal device based on the energy.

Correspondingly, when the user plane security policy indicates preferred or preferred according to the energy state, the access network device may control security protection for the data radio bearer of the session of the terminal device based on energy consumed by a network to transmit data of the terminal device or energy efficiency corresponding to transmission of data of the terminal device by the network. It may be understood that the network is a network in which the access network device and the session management function network element are located. S301 may also be replaced with the description that the session management function network element in the network sends the user plane security policy corresponding to the session of the terminal device to the access network device in the network.

In a possible implementation, subscription information of the terminal device stored in a unified data management network element includes the user plane security policy corresponding to the session of the terminal device, and the session management function network element may obtain, from the unified data management network element, the user plane security policy corresponding to the session of the terminal device, and then forward the user plane security policy to the access network device. For example, in a session establishment process, the terminal device initiates a session establishment request (session establishment request) to the session management function network element via an access network device. The session management function network element may query the subscription information of the terminal device from the unified data management network element in the session establishment process, or the session management function network element may query the subscription information of the terminal device from the unified data management network element after the session is established. The session in embodiments of this application may be a PDU session or another session, and the PDU session may be used as an example of the session.

It may be understood that in this embodiment of this application, control of user plane security protection for the session may be performed in the session establishment process, or may be performed after the session is established, or in a session modification procedure after the session is established, or in a subsequent process of establishing a new session. This is not limited in embodiments of this application. For example, in FIG. 3, optional steps are further shown by using dashed lines before S301. S300a: The terminal device initiates a session establishment request to the session management function network element via the access network device. S300b: The session management function network element obtains the subscription information of the terminal device from the unified data management network element, where the subscription information includes the user plane security policy corresponding to the session of the terminal device.

In addition, optionally, the subscription information of the terminal device may further include indication information indicating the session management function network element to perform energy information statistics, and the energy information statistics may include statistics on energy consumption and/or statistics on energy efficiency. The indication information may be explicitly indicated in the subscription information of the terminal device. For example, the subscription information of the terminal device includes a separate field indicating the session management function network element to perform energy information statistics. Alternatively, the indication information may be implicitly indicated in the subscription information of the terminal device. For example, when a specific bit in an ID of the terminal device is 1, it indicates that the indication information exists, or the indication information may be indicated by a message name.

Correspondingly, the session management function network element may obtain an energy limit corresponding to the terminal device or an energy limit corresponding to the session of the terminal device in response to the indication information. The energy limit corresponding to the terminal device refers to a maximum value of energy used by the network to transmit data of the terminal device, or may be understood as a maximum value of energy that is allowed to be consumed by the network to transmit the data of the terminal device, or a maximum amount of energy that can be consumed by the network to transmit the data of the terminal device. The energy limit of the session refers to a maximum value of energy used by the network to transmit data of the session, or may be understood as a maximum value of energy that is allowed to be consumed by the network to transmit the data of the session, or a maximum amount of energy that can be consumed by the network to transmit the data of the session. Optionally, the energy limit of the terminal device may also be replaced with a total energy limit corresponding to the terminal device, and the energy limit of the terminal device includes an energy limit of each session of the terminal device. For example, the energy limit of the terminal device or the energy limit of the session of the terminal device is configured in the subscription information of the terminal device, and the session management function network element may obtain the energy limit of the terminal device or the energy limit of the session of the terminal device based on the subscription information of the terminal device. For another example, the session management function network element may send an energy limit query request to a network data analytics function (charging function, CHF) network element, an NWDAF network element, or an independently disposed energy information network element, and receive an energy limit query response. The energy limit query response may include one or more of the following: an energy limit of a network slice, the energy limit of the terminal device, or the energy limit of the session of the terminal device.

S302: The access network device determines, based on the energy information corresponding to the terminal device, whether to activate security protection for the data radio bearer of the session of the terminal device.

In a possible implementation, this step may be divided into the following two steps: S3021 and S3022 for execution.

S3021: The access network device determines whether the energy information corresponding to the terminal device meets a first condition.

The energy information corresponding to the terminal device indicates energy consumed by the network corresponding to the access network device to transmit data of the terminal device, or the energy information corresponding to the terminal device indicates energy efficiency corresponding to transmission of the data of the terminal device by the network corresponding to the access network device. It may be understood that the energy information corresponding to the terminal device includes energy information corresponding to the session of the terminal device, the energy consumed by the network to transmit the data of the terminal device includes energy consumed by the network to transmit data of the session of the terminal device, and the energy efficiency corresponding to transmission of the data of the terminal device by the network includes energy efficiency corresponding to transmission of the data of the session of the terminal device by the network.

First, the access network device may obtain the energy information corresponding to the terminal device. For example, the access network device obtains, from a first network element, the energy information corresponding to the terminal device. The first network element can be configured to collect statistics on (store) energy currently consumed by the network to transmit the data of the terminal device. The first network element may be an OAM, an AMF, an NWDAF, or an independently disposed energy information network element. For example, the first network element is an OAM. The access network device may send an energy data query request to the OAM, and the OAM sends an energy data query response to the access network device. The energy data query response includes energy (for example, 1000 joules of electrical energy) consumed by the network to transmit the data of the terminal device, or includes an energy efficiency level (for example, level 1, level 2, or level 3) corresponding to transmission of the data of the terminal device by the network. Optionally, the energy data query response may also include energy consumption corresponding to the access network device. The access network device manages a plurality of terminal devices, and may average the energy consumption corresponding to the access network device to energy consumption corresponding to each terminal device. For example, the access network device manages three terminal devices, and the access network device obtains the energy consumption corresponding to the access network device from the OAM and divides the energy consumption by 3 to obtain the energy consumed by the network to transmit the data of the terminal device. For another example, the first network element is an OAM. The access network device may send an energy data subscription request to the OAM, where the energy data subscription request includes subscription periodicity information. The OAM may periodically send an energy data subscription response to the access network device based on the subscription periodicity information. The energy data subscription response includes energy (for example, 1000 joules of electrical energy) currently consumed by the network to transmit the data of the terminal device, or includes an energy efficiency level (for example, level 1, level 2, or level 3) corresponding to transmission of the data of the terminal device by the network.

Then, the access network device determines, based on the received energy information, whether the energy information corresponding to the terminal device meets the first condition.

The following describes several definitions of the first condition by using examples.

Example 1: The energy information corresponding to the terminal device indicates the energy consumed by the network to transmit the data of the terminal device, and the first condition indicates that a difference between the energy and an energy limit is less than or equal to a first threshold.

It may be understood that the energy limit corresponds to the terminal device, for example, may be an energy limit of the terminal device; or when the energy consumed by the network to transmit the data of the terminal device is energy consumed by the network to transmit data of the session of the terminal device, the energy limit may be an energy limit of the session of the terminal device. In a possible design, the energy limit described in Example 1 may be indicated by the session management function network element to the terminal device by using second information. For example, according to the descriptions in S301, the session management function network element obtains the energy limit of the terminal device, and the session management function network element may send second information to the access network device, where the second information indicates the energy limit of the terminal device. Alternatively, the session management function network element may determine the energy limit of the session of the terminal device based on the energy limit of the terminal device. For example, the terminal device corresponds to five sessions, and the energy limit of the session of the terminal device may be 20% of the energy limit of the terminal device. Further, the session management function network element sends second information to the access network device, where the second information indicates the energy limit of the session of the terminal device. It may be understood that the session management function network element may simultaneously send the user plane security policy described in S301 and the second information, or may send the user plane security policy and the second information non-simultaneously, that is, at different moments. This is not limited in embodiments of this application. For example, an SMF first sends the user plane security policy in a PDU session establishment process, and then sends the second information in a PDU session update procedure. In another possible design, the energy limit is independently determined by the access network device according to a local policy.

Based on this, if the access network device determines that the difference between the received energy consumed by the network to transmit the data of the terminal device and the energy limit is less than or equal to the first threshold, the access network device determines that the energy information corresponding to the terminal device meets the first condition; or if the access network device determines that the difference between the received energy consumed by the network to transmit the data of the terminal device and the energy limit is greater than the first threshold, the access network device determines that the energy information corresponding to the terminal device does not meet the first condition. Optionally, the second threshold in Example 1 may be predefined in a protocol, or locally pre-configured by the access network device, or indicated by the OAM to the access network device.

Example 2: The energy information corresponding to the terminal device indicates the energy consumed by the network to transmit the data of the terminal device, and the first condition indicates that a ratio of the energy to the energy limit is greater than or equal to a second threshold.

For a definition of the energy limit, refer to Example 1 for understanding. Details are not described again in this embodiment of this application.

Based on this, if the access network device determines that the ratio of the received energy consumed by the network to transmit the data of the terminal device to the energy limit is greater than or equal to the second threshold, the access network device determines that the energy information corresponding to the terminal device meets the first condition; or if the access network device determines that the ratio of the received energy consumed by the network to transmit the data of the terminal device to the energy limit is less than the second threshold, the access network device determines that the energy information corresponding to the terminal device does not meet the first condition. Optionally, the second threshold in Example 2 may be predefined in a protocol, or locally pre-configured by the access network device, or indicated by the OAM to the access network device.

Example 3: The energy information corresponding to the terminal device indicates the energy consumed by the network to transmit the data of the terminal device, and the first condition indicates that the consumed energy is greater than or equal to a third threshold. Based on this, if the access network device determines that the received energy consumed by the network to transmit the data of the terminal device is greater than or equal to the third threshold, the access network device determines that the energy information corresponding to the terminal device meets the first condition; or if the access network device determines that the received energy consumed by the network to transmit the data of the terminal device is less than the third threshold, the access network device determines that the energy information corresponding to the terminal device does not meet the first condition. Optionally, the third threshold in Example 3 may be predefined in a protocol, or locally pre-configured by the access network device, or indicated by the OAM to the access network device.

Example 4: The energy information corresponding to the terminal device indicates the energy efficiency corresponding to transmission of the data of the terminal device by the network, and the first condition indicates that the energy efficiency is less than or equal to a fourth threshold. Based on this, if the access network device determines that the received energy efficiency corresponding to transmission of the data of the terminal device by the network is less than or equal to the fourth threshold, the access network device determines that the energy information corresponding to the terminal device meets the first condition; or if the access network device determines that the received energy efficiency corresponding to transmission of the data of the terminal device by the network is greater than the fourth threshold, the access network device determines that the energy information corresponding to the terminal device does not meet the first condition. Optionally, the fourth threshold in this example may be predefined in a protocol, or locally pre-configured by the access network device, or indicated by the OAM to the access network device.

S3022: If the energy information corresponding to the terminal device meets the first condition, the access network device determines not to activate security protection for the data radio bearer of the session.

In a possible implementation, if the access network device determines, before performing S302, that security protection for the data radio bearer of the session of the terminal device is activated, after performing S3022 of determining not to activate security protection for the data radio bearer of the session, the access network device may further de-activate (de-activate) security protection for the data radio bearer of the session. For example, the access network device may send an RRC connection reconfiguration, to de-activate (de-activate) security protection for the data radio bearer of the session.

In another possible implementation, if the access network device determines, before performing S302, that security protection for the data radio bearer of the session of the terminal device is not configured, or security protection for the data radio bearer of the session of the terminal device is not activated, after performing S3022 of determining not to activate security protection for the data radio bearer of the session, the access network device does not need to perform configuration related to security protection for the data radio bearer of the session.

In addition, if the energy information corresponding to the terminal device does not meet the first condition, the access network device determines, by using a solution designed according to the existing protocol or technology, whether to activate security protection for the data radio bearer of the session. This is not limited in embodiments of this application.

In the foregoing solution 1, when the user plane security policy corresponding to the session of the terminal device indicates preferred, the access network device determines, based on the energy information corresponding to the terminal device, whether to activate security protection for the data radio bearer of the session of the terminal device. For example, when the energy information corresponding to the terminal device meets a specified condition, the access network device determines not to activate security protection for the data radio bearer of the session of the terminal device, so that network energy consumption can be reduced, and energy saving can be implemented.

It should be understood that sequence numbers of the processes do not mean an execution sequence in the foregoing embodiments. The execution sequence of the processes should be determined based on functions and internal logic of the processes, and should not be construed as any limitation on the implementation processes of embodiments of this application.

### Solution 2

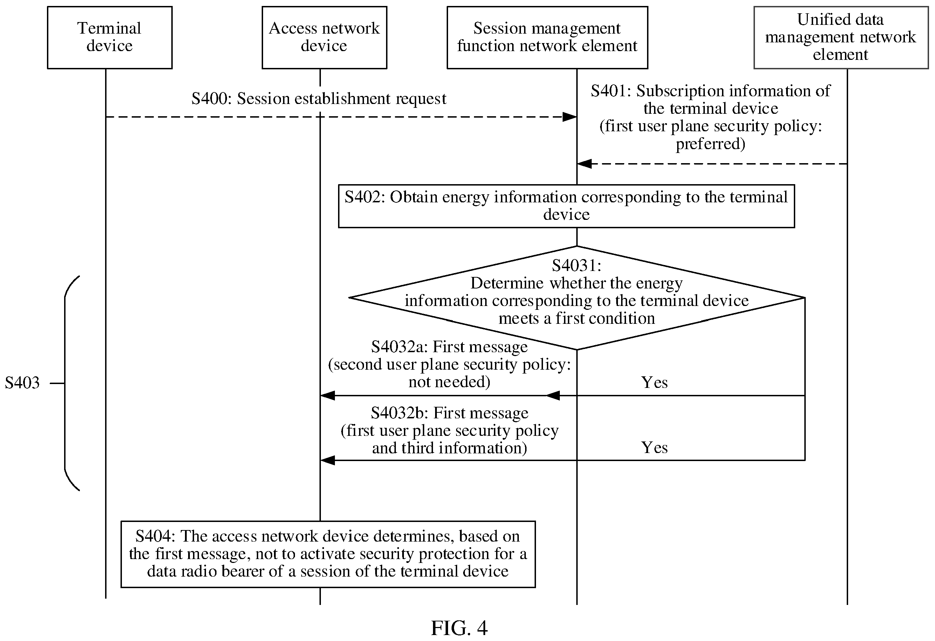

FIG. 4 shows a communication method. The method mainly includes the following steps.

S401: A unified data management network element sends, to a session management function network element, a first user plane security policy corresponding to a session of a terminal device.

The first user plane security policy corresponding to the session indicates preferred (preferred). Alternatively, a user plane security policy indication a may be newly added based on the first user plane security policy indicating required, not needed, or preferred. For example, the newly added user plane security policy indication a may indicate preferred according to an energy state (preferred according to energy state). Based on this, the first user plane security policy corresponding to the session indicating preferred according to the energy state may also be understood as indicating that it is preferred to activate security protection for a DRB of the session of the terminal device based on energy or it is preferred not to activate security protection for the DRB of the session of the terminal device based on the energy.

In a possible implementation, subscription information of the terminal device stored in the unified data management network element includes the first user plane security policy corresponding to the session of the terminal device, and the unified data management network element may send the subscription information of the terminal device to the session management function network element. For example, in a session establishment process, the terminal device initiates a session establishment request (session establishment request) to the session management function network element via an access network device. The session management function network element may query the subscription information of the terminal device from the unified data management network element in the session establishment process, or the session management function network element may query the subscription information of the terminal device from the unified data management network element after the session is established. It may be understood that in this embodiment of this application, control of user plane security protection for the session may be performed in the session establishment process, or may be performed after the session is established. For example, control of user plane security protection for the session may be performed in a session modification procedure triggered because an energy consumption status changes after the session is established. This is not limited in embodiments of this application. For example, before S401, FIG. 4 further shows an optional step by using a dashed line. S400: The terminal device initiates the session establishment request to the session management function network element via the access network device.

Optionally, the subscription information of the terminal device stored in the unified data management network element may further include indication information indicating the session management function network element to perform statistics collection on energy consumption. The indication information may be explicitly indicated in the subscription information of the terminal device. For example, the subscription information of the terminal device includes a separate field indicating the session management function network element to perform statistics collection on energy consumption. Alternatively, the indication information may be implicitly indicated in the subscription information of the terminal device. For example, when a specific bit in an ID of the terminal device is 1, it indicates that the indication information exists, or the indication information may be indicated by a message name. Correspondingly, the session management function network element may obtain an energy limit of the terminal device or an energy limit of the session of the terminal device in response to the indication information. For example, the energy limit of the terminal device or the energy limit of the session of the terminal device is configured in the subscription information of the terminal device stored in the unified data management network element, and the session management function network element may obtain the energy limit of the terminal device or the energy limit of the session of the terminal device based on the subscription information of the terminal device. For another example, the session management function network element may send an energy limit query request to a CHF, an NWDAF, or an independently disposed energy information network element, and receive an energy limit query response. The energy limit query response may include one or more of the following: an energy limit of a network slice, the energy limit of the terminal device, or the energy limit of the session of the terminal device.

It may be understood that S401 is shown in FIG. 4 as an optional step. In other words, when this solution is implemented, S401 may be skipped and execution may start from S402. This is not limited in embodiments of this application.

S402: The session management function network element obtains energy information corresponding to the terminal device.

It may be understood that the energy information corresponding to the terminal device indicates energy consumed by a network to transmit data of the terminal device, or the energy information corresponding to the terminal device indicates energy efficiency corresponding to transmission of the data of the terminal device by the network. It may be understood that the energy information corresponding to the terminal device includes energy information corresponding to the session of the terminal device, the energy consumed by the network to transmit the data of the terminal device includes energy consumed by the network to transmit data of the session of the terminal device, and the energy efficiency corresponding to transmission of the data of the terminal device by the network includes energy efficiency corresponding to transmission of the data of the session of the terminal device by the network. The "network" herein is a network in which the session management function network element, the access network device, and the terminal device are located.

In a possible design, the session management function network element may receive the energy information corresponding to the terminal device from a first network element. For example, the first network element may be an OAM. For a manner in which the session management function network element obtains the energy information from the OAM, refer to the descriptions in S3021 for understanding. Details are not described again in this embodiment of this application. In another possible design, the session management function network element may independently collect statistics on the energy consumed by the network to transmit the data of the session of the terminal device and/or the energy efficiency corresponding to transmission of the data of the terminal device by the network.

S403: The session management function network element sends a first message to the access network device based on the energy information corresponding to the terminal device.

The first message is used by the access network device to determine whether to activate security protection for the data radio bearer of the session of the terminal device.

When S401 is performed, step S403 may also be replaced with the description that when the first user plane security policy indicates preferred, the session management function network element sends the first message to the access network device based on the energy information.

For example, this step may be divided into the following two steps: S4031 and S4032a, or S4031 and S4032b for execution.

S4031: The session management function network element determines whether the energy information corresponding to the terminal device meets a first condition.

When the energy information corresponding to the terminal device indicates the energy consumed by the network to transmit the data of the terminal device, the first condition indicates that a difference between the energy and an energy limit is less than or equal to a first threshold; or when the energy information corresponding to the terminal device indicates the energy consumed by the network to transmit the data of the terminal device, the first condition indicates that a ratio of the energy to the energy limit is greater than or equal to a second threshold; or when the energy information corresponding to the terminal device indicates the energy consumed by the network to transmit the data of the terminal device, the first condition indicates that the energy is greater than or equal to a third threshold; or when the energy information corresponding to the terminal device indicates the energy efficiency corresponding to transmission of the data of the terminal device by the network, the first condition indicates that the energy efficiency is less than or equal to a fourth threshold.

In a possible design, the session management function network element may independently determine whether the energy information corresponding to the terminal device meets the first condition. In another possible design, after receiving the energy information corresponding to the terminal device from the first network element, the session management function network element may request the CHF to perform statistical analysis on the energy information; and then the session management function network element determines, based on feedback information of the CHF, whether the energy information corresponding to the terminal device meets the first condition. For example, the session management function network element may send an energy usage report (energy usage report) to the CHF periodically or in a pre-configuration manner, where the energy usage report includes energy that is summarized by the session management function network element and is consumed by the network to transmit the data of the terminal device. The CHF checks, based on the energy usage report sent by the session management function network element, whether the energy consumed by the network to transmit the data of the terminal device meets the first condition. If the consumed energy meets the first condition, the CHF sends a second message to an SMF, where the second message may include an ID of a target session and/or an ID of the terminal device. It may be understood that the second message indicates that the energy information corresponding to the terminal device meets the first condition, and the second message further indicates to de-activate or not to activate security protection for a data radio bearer of the target session of the terminal device.

Further, when determining that the energy information corresponding to the terminal device meets the first condition, the session management function network element performs S4032a or S4032b.

S4032a: The session management function network element sends a first message to the access network device, where the first message includes a second user plane security policy corresponding to the session of the terminal device.

If the energy information corresponding to the terminal device meets the first condition, the second user plane security policy indicates not needed, which is replaced with the description that the second user plane security policy indicates that security protection corresponding to the session does not need to be activated. Security protection corresponding to the session may be user plane security protection corresponding to the session, for example, security protection for the data radio bearer of the session. Correspondingly, the access network device determines, according to the second user plane security policy, not to activate security protection for the data radio bearer of the session of the terminal device. For example, in a roaming scenario, the session management function network element may modify, according to a local policy related to energy consumption, the user plane security policy in the subscription information of the terminal device from indicating preferred to indicating not needed.

In a possible design, if the session management function network element determines, before sending the second user plane security policy, that security protection for the data radio bearer of the session of the terminal device is activated, the second user plane security policy included in the first message sent by the session management function network element may be understood as being used to trigger the access network device to de-activate (de-activate) security protection for the data radio bearer of the session of the terminal device. Correspondingly, after receiving the second user plane security policy, the access network device may send an RRC connection reconfiguration, to de-activate (de-activate) security protection for the data radio bearer of the session.

For example, the session management function network element may determine, in one or more of the following manners, that security protection for the radio bearer of the session of the terminal device is activated: The session management function network element receives a user plane enforcement policy notification (user plane enforcement policy notification) from the access network device, where the user plane enforcement policy notification indicates that security protection for the radio bearer of the session of the terminal device is activated; or the session management function network element queries a historical session record from the unified data management network element based on the identifier of the terminal device; or the session management function network element may locally store the user plane security policy indicated to the access network device. Based on this, the session management function network element determines, based on the local historical record, whether security protection for the radio bearer of the session of the terminal device is activated.

S4032b: The session management function network element sends a first message to the access network device, where the first message includes the first user plane security policy and third information.

The first user plane security policy is from the unified data management network element, the first user plane security policy corresponds to the session of the terminal device, and the first user plane security policy indicates preferred. The third information indicates that the energy information corresponding to the terminal device meets the first condition, and the third information is used to trigger the access network device to determine not to activate security protection for the data radio bearer of the session of the terminal device. Optionally, the third information may also be replaced with an energy cause indication or another name. This is not limited in embodiments of this application.

S404. The access network device determines, based on the first message, not to activate security protection for the data radio bearer of the session of the terminal device.

In the foregoing solution 2, when the user plane security policy corresponding to the session of the terminal device indicates preferred, the session management function network element updates and indicates the user plane security policy to the access network device based on the energy information corresponding to the terminal device. Therefore, the access network device quickly determines not to activate security protection for the data radio bearer of the session of the terminal device, so that network energy consumption can be reduced, and energy saving can be implemented.

It should be understood that sequence numbers of the processes do not mean an execution sequence in the foregoing embodiments. The execution sequence of the processes should be determined based on functions and internal logic of the processes, and should not be construed as any limitation on the implementation processes of embodiments of this application.

### Solution 3

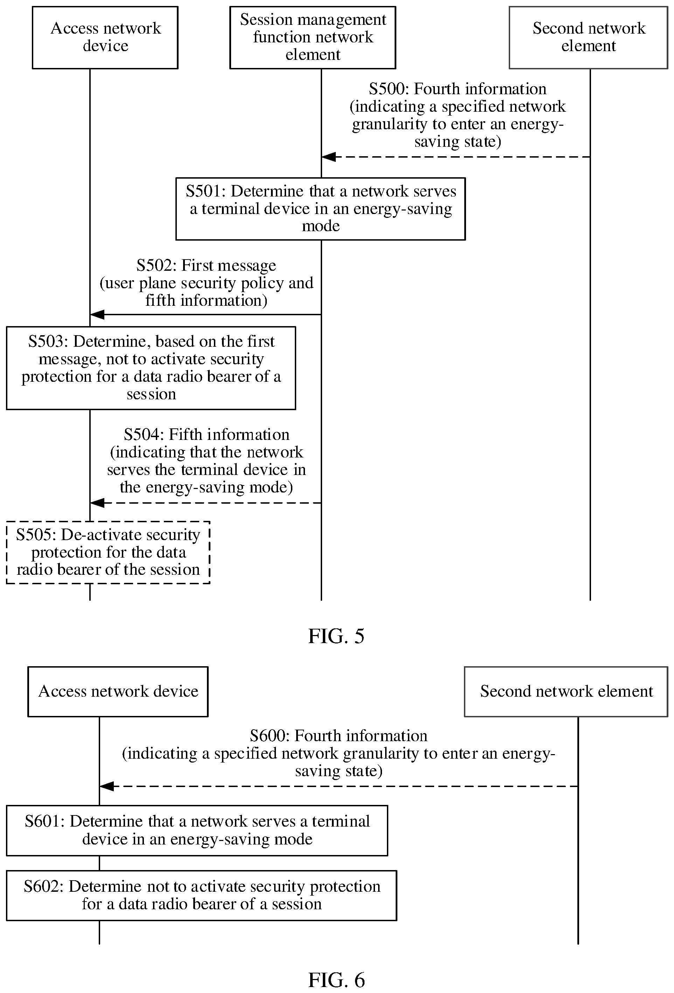

FIG. 5 shows a communication method. The communication method may be applied before a session (for example, PDU session) establishment process of a terminal device, in the session (for example, PDU session) establishment process of the terminal device, after the session (for example, PDU session) establishment process of the terminal device, or in a session (for example, PDU session) modification process of the terminal device. For example, the method mainly includes the following steps.

S501: A session management function network element determines that a network serves a terminal device in an energy-saving mode.

That the network serves the terminal device in the energy-saving mode may also be replaced with the description that a mode in which the network serves the terminal device is the energy-saving mode.

In a possible design, triggered by another network element, the session management function network element may determine that the network serves the terminal device in the energy-saving mode. It may be understood that the network is a network in which the session management function network element is located. For example, the session management function network element receives fourth information, where the fourth information indicates a specified network granularity to enter an energy-saving state (or referred to as an energy-saving mode), which is replaced with the description that the fourth information is used to request or trigger the session management function network element to perform energy consumption control on all sessions of the specified network granularity. If all the sessions corresponding to the specified network granularity include a session of the terminal device, the session management function network element may determine that the network serves the terminal device in the energy-saving mode.

For example, the specified network granularity may also be replaced with a specified level, and the specified network granularity may be at least one of a node level, a slice level, or an application level. As shown in FIG. 5, before S501, S500 may be further performed: The session management function network element receives the fourth information from a second network element, where the second network element may be an OAM, an NWDAF, a PCF, an AF, a NEF, or an independently disposed energy information network element. When the fourth information is from the OAM, the specified network granularity is a current entire network or a specific node. For example, the fourth information indicates the access network device to enter the energy-saving state, the access network device serves (or manages) the terminal device, and all sessions of the terminal device served by the access network device include the session of the terminal device described in S501. For another example, the fourth information indicates the session management function network element to enter the energy-saving state, and a session managed by the session management function network element includes the session of the terminal device described in S501. When the fourth information is from the NWDAF, the specified network granularity is a network slice or a specific node, the fourth information indicates the network slice to enter the energy-saving state, and the network slice includes the session of the terminal device described in S501. When the fourth information is from the AF or the NEF, the specified network granularity is an application level, the fourth information indicates an application to enter the energy-saving state, and all sessions related to the application include the session of the terminal device described in S501. When the fourth information is from the independently disposed energy information network element, the specified network granularity is a terminal level, and the fourth information indicates that the network serves the terminal device in the energy-saving mode; or the specified network granularity is a node level (for example, an access network device), and the fourth information indicates the access network device to enter the energy-saving state. When the fourth information is from the PCF, the specified network granularity is a terminal level, and the fourth information indicates that the network serves the terminal device in the energy-saving mode; or the specified network granularity is a session level, and the fourth information indicates a service mode for the session to enter the energy-saving state.

Further, in S502, it is shown that after determining that the network serves the terminal device in the energy-saving mode, the session management function network element triggers the access network device to determine not to activate security protection for a data radio bearer of the session.

S502: The session management function network element sends a first message to the access network device.
the first message is used by the access network device to determine not to activate security protection for the data radio bearer of the session.

In a possible design, the first message includes a user plane security policy corresponding to the session of the terminal device and fifth information, the user plane security policy corresponding to the session of the terminal device indicates preferred, and the fifth information indicates that the network serves the terminal device in the energy-saving mode. For a manner of determining the user plane security policy, refer to the descriptions in S301 for understanding. Details are not described again in this embodiment of this application.

In another possible design, the first message includes a user plane security policy of the terminal device, and the user plane security policy indicates not needed, that is, that security protection corresponding to the session of the terminal device does not need to be activated.

Correspondingly, after receiving the first message, the access network device may perform the following step S503.

S503: The access network device determines, based on the first message, not to activate security protection for the data radio bearer of the session.

In addition, optionally, when user plane security protection for the session of the terminal device is activated, and the session management function network element determines that the network serves the terminal device in the energy-saving mode, step S502 may be replaced with S504 shown in FIG. 5: The session management function network element may send only fifth information to the access network device, where the fifth information indicates that the network serves the terminal device in the energy-saving mode, and further triggers the access network device to perform S505: De-activate (de-activate) security protection for the data radio bearer of the session. For example, the access network device may send an RRC connection reconfiguration, to de-activate (de-activate) security protection for the data radio bearer of the session.

It should be understood that sequence numbers of the processes do not mean an execution sequence in the foregoing embodiments. The execution sequence of the processes should be determined based on functions and internal logic of the processes, and should not be construed as any limitation on the implementation processes of embodiments of this application.

### Solution 4

FIG. 6 shows a communication method. The communication method may be applied before a session (for example, PDU session) establishment process of a terminal device, in the session (for example, PDU session) establishment process of the terminal device, after the session (for example, PDU session) establishment process of the terminal device, or in a session (for example, PDU session) modification process of the terminal device. For example, the method mainly includes the following steps.

S601: An access network device determines that a network serves a terminal device in an energy-saving mode. That the network serves the terminal device in the energy-saving mode may also be replaced with the description that a mode in which the network serves the terminal device is the energy-saving mode.

In a possible design, triggered by another network element, the access network device may determine that the network serves the terminal device in the energy-saving mode. For example, the access network device receives fourth information, where the fourth information indicates a specified network granularity to enter an energy-saving state (or referred to as an energy-saving mode), which is replaced with the description that the fourth information is used to request or trigger a session management function network element to perform energy consumption control on all sessions of the specified network granularity. If all the sessions corresponding to the specified network granularity include a session of the terminal device, the session management function network element may determine that the network serves the terminal device in the energy-saving mode.

For example, the specified network granularity may also be replaced with a specified level, and the specified network granularity may be at least one of a node level, a slice level, or an application level. As shown in FIG. 6, before S601, S600 may be further performed: The access network device receives the fourth information, where the fourth information may be from a second network element. The second network element may be an OAM, an NWDAF, a PCF, an AF, a NEF, or an independently disposed energy information network element. When the fourth information is from the OAM, the specified network granularity is a current entire network or a specific node. For example, the fourth information indicates the access network device to enter the energy-saving state, and all sessions of the terminal device managed by the access network device include the session of the terminal device described in S601. For another example, the fourth information indicates the session management function network element to enter the energy-saving state, and all sessions managed by the session management function network element include the session of the terminal device described in S601. When the fourth information is from the NWDAF, the specified network granularity is a network slice or a specific node, the fourth information indicates the network slice to enter the energy-saving state, and the network slice includes the session of the terminal device described in S601. When the fourth information is from the AF or the NEF, the specified network granularity is an application level, the fourth information indicates an application to enter the energy-saving state, and all sessions related to the application include the session of the terminal device described in S601. When the fourth information is from the independently disposed energy information network element, the specified network granularity is a terminal level, and the fourth information indicates that the network serves the terminal device in the energy-saving mode; or the specified network granularity is a node level (for example, an access network device), and the fourth information indicates the access network device to enter the energy-saving state. When the fourth information is from the PCF, the specified network granularity is a terminal level, and the fourth information indicates that the network serves the terminal device in the energy-saving mode; or the specified network granularity is a session level, and the fourth information indicates a service mode for the session to enter the energy-saving state.

S602: The access network device determines not to activate security protection for a data radio bearer of the session of the terminal device.

Optionally, the access network device may further obtain, from the session management network element, a user plane security policy corresponding to the session of the terminal device, or the access network device does not activate security protection for the data radio bearer of the session of the terminal device according to a user plane security policy corresponding to a session of the terminal device in a historical record when the user plane security policy indicates preferred.

In the foregoing solution 3 and solution 4, the specified network granularity is configured to enter the energy-saving state, and security protection for the data radio bearer of the session of the terminal device corresponding to the specified network granularity is not activated or is de-activated (de-activate), so that network energy consumption can be reduced, and energy saving can be implemented.

It should be understood that sequence numbers of the processes do not mean an execution sequence in the foregoing embodiments. The execution sequence of the processes should be determined based on functions and internal logic of the processes, and should not be construed as any limitation on the implementation processes of embodiments of this application.

### Solution 5

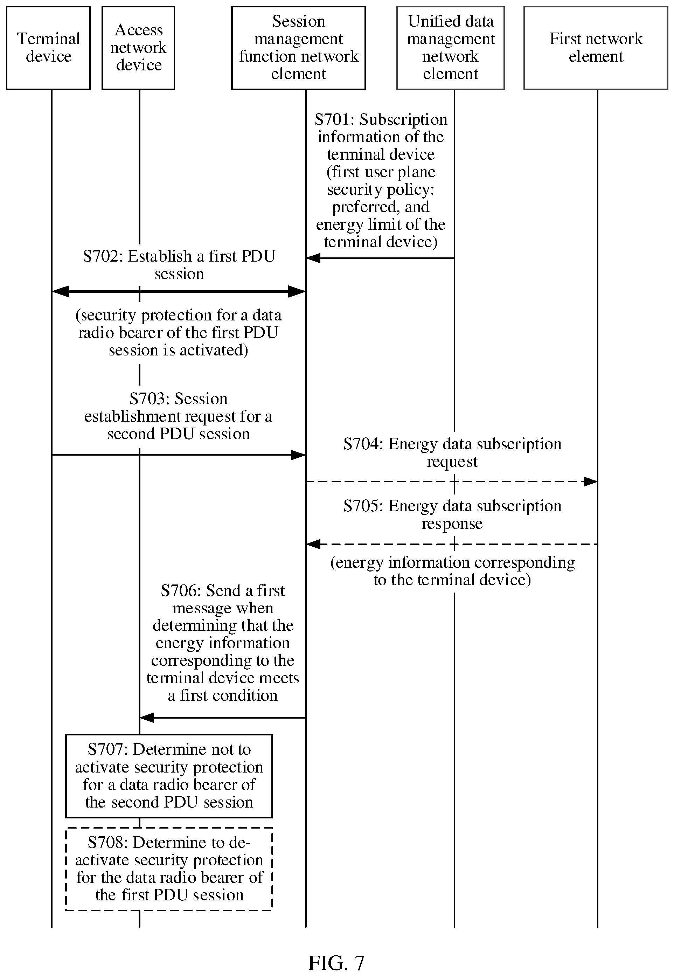

FIG. 7 shows a communication method. The communication method includes the following steps.

S701: A session management function network element obtains subscription information of a terminal device from a unified data management network element.

The subscription information includes a first user plane security policy corresponding to a session of the terminal device and an energy limit of the terminal device, and the first user plane security policy indicates "preferred".

S702: The session management function network element establishes a first PDU session with the terminal device.

After the session is successfully established, security protection for a data radio bearer of the first PDU session is activated.

S703: The terminal device initiates a session establishment request for a second PDU session to the session management function network element via an access network device.

S704: The session management function network element sends an energy data subscription request to a first network element, where the energy data subscription request is used to subscribe to energy information corresponding to the terminal device.

The energy information corresponding to the terminal device indicates energy consumed by a network to transmit data of the terminal device, and/or includes energy efficiency corresponding to transmission of the data of the terminal device by the network.

The first network element may be an OAM, an NWDAF, a PCF, or an independently disposed energy information network element.

S705: The first network element sends an energy data subscription response to the session management function network element, where the energy data subscription response includes the energy information corresponding to the terminal device.

The energy information corresponding to the terminal device indicates a value of energy currently consumed by the network to transmit the data of the terminal device, and/or includes an energy efficiency level corresponding to transmission of the data of the terminal device by the network.

Optionally, the energy data subscription request may be used to periodically subscribe to the energy information corresponding to the terminal device. Correspondingly, the first network element may periodically send the energy data subscription response to the session management function network element, that is, the first network element sends the energy data subscription response once every specific time (for example, one hour). The energy data subscription response sent each time includes latest data, for example, energy currently consumed by the network to transmit the data of the terminal device, and/or includes current energy efficiency corresponding to transmission of the data of the terminal device by the network.

Optionally, the session function network element may also independently collect statistics on energy currently consumed by the terminal device, to determine the energy information corresponding to the terminal device. In this case, S704 and S705 do not need to be performed, that is, S704 and S705 are optional steps, and are shown by using dashed lines in FIG. 7.

S706: The session management function network element sends a first message to the access network device when determining that the energy information corresponding to the terminal device meets a first condition.

The first message is used to trigger the access network device to determine not to activate security protection for a data radio bearer of the second PDU session of the terminal device. Optionally, the first message is further used to trigger the access network device to de-activate (de-activate) security protection for the data radio bearer of the first PDU session. For a definition of the first condition, refer to the descriptions in S3021 and S4031 for understanding. This step may be implemented with reference to the descriptions in S402.

In a possible implementation, the first message includes a second user plane security policy corresponding to the session of the terminal device, and the second user plane security policy indicates not needed. In another possible implementation, the first message includes the first user plane security policy corresponding to the session of the terminal device, and the third information indicating that the energy information corresponding to the terminal device meets the first condition.

S707: The access network device determines, based on the first message, not to activate security protection for the data radio bearer of the second PDU session.

Optionally, the access network device may further perform S708.

S708: The access network device determines, based on the first message, to de-activate (de-activate) security protection for the data radio bearer of the first PDU session.

For example, the access network device may send an RRC connection reconfiguration, to de-activate (de-activate) security protection for the data radio bearer of the session. In the foregoing solution 5, in a process of establishing a new PDU session, with reference to energy consumption corresponding to a successfully established PDU session, if the energy consumption corresponding to the successfully established PDU session meets the first condition indicating excessive consumption, security protection for a data radio bearer of the new PDU session is not activated, to reduce network energy consumption and implement energy saving.

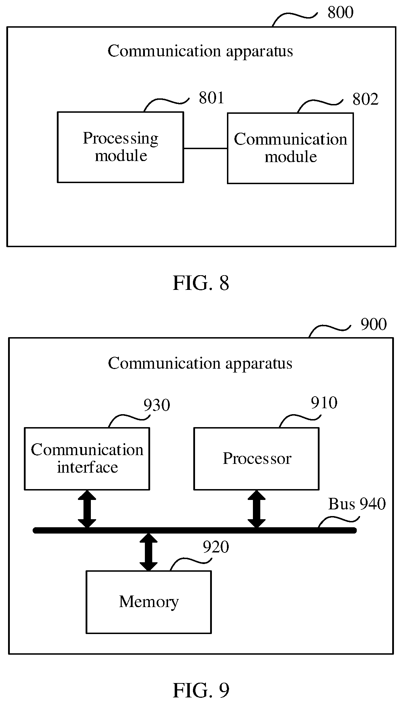

Based on a same concept, refer to FIG. 8. An embodiment of this application provides a communication apparatus 800. The communication apparatus 800 includes a processing module 801 and a communication module 802. The communication apparatus 800 may be a terminal device, or may be a communication apparatus that is used for the terminal device or is used in conjunction with the terminal device and can implement a communication method performed on a terminal device side. Alternatively, the communication apparatus 800 may be an access network device, or may be a communication apparatus that is used for the access network device or is used in conjunction with the access network device and can implement a communication method performed on an access network device side. Alternatively, the communication apparatus 800 may be a core network element, or may be a communication apparatus that is used for the core network element or is used in conjunction with the core network element and can implement a communication method performed on a core network element side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used for the terminal device, the processing module 801 may be configured to implement a processing function of the terminal device in the embodiments shown in FIG. 3 to FIG. 7, and the communication module 802 may be configured to implement receiving and sending functions of the terminal device in the embodiments shown in FIG. 3 to FIG. 7.

When the communication apparatus 800 is used for the access network device, the processing module 801 may be configured to implement a processing function of the access network device in the embodiments shown in FIG. 3 to FIG. 7, and the communication module 802 may be configured to implement receiving and sending functions of the access network device in the embodiments shown in FIG. 3 to FIG. 7.

When the communication apparatus 800 is used for the core network element, the processing module 801 may be configured to implement a processing function of the core network element in the embodiments shown in FIG. 3 to FIG. 7, and the communication module 802 may be configured to implement receiving and sending functions of the core network element in the embodiments shown in FIG. 3 to FIG. 7.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented by a physical apparatus. For example, if the communication apparatus is implemented by a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely logical function division, and may be other division during actual implementation. In addition, functional modules in each of embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 900. For example, the communication apparatus 900 may be a chip or a chip system. Optionally, in this embodiment of this application, the chip system may include a chip, or may include a chip and another discrete component.

The communication apparatus 900 may be configured to implement a function of any network element in the communication system described in the foregoing embodiments. The communication apparatus 900 may include at least one processor 910. The processor 910 is coupled to a memory. Optionally, the memory may be located in the communication apparatus, the memory may be integrated with the processor, or the memory may be located outside the communication apparatus. For example, the communication apparatus 900 may further include at least one memory 920. The memory 920 stores a necessary computer program, a computer program, or instructions and/or data for implementing any one of the foregoing embodiments. The processor 910 may execute the computer program stored in the memory 920, to complete the method in any one of the foregoing embodiments.

The communication apparatus 900 may further include a communication interface 930. The communication apparatus 900 may exchange information with another device through the communication interface 930. For example, the communication interface 930 may be a transceiver, a circuit, a bus, a module, a pin, or a communication interface of another type. When the communication apparatus 900 is a chip-type apparatus or circuit, the communication interface 930 in the communication apparatus 900 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may cooperate with the memory 920 and the communication interface 930. In embodiments of this application, a specific connection medium among the processor 910, the memory 920, and the communication interface 930 is not limited.

Optionally, refer to FIG. 9. The processor 910, the memory 920, and the communication interface 930 are connected to each other through a bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

In a possible implementation, the communication apparatus 900 may be used for an access network device. The communication apparatus 900 may be the access network device, or may be an apparatus that can support the access network device in implementing a function of the access network device in any one of the foregoing embodiments. The memory 920 stores a computer program (or instructions) and/or data for implementing the function of the access network device in any one of the foregoing embodiments. The processor 910 may execute the computer program stored in the memory 920, to complete the method performed by the access network device in any one of the foregoing embodiments. When the communication apparatus 900 is used for the access network device, the communication interface in the communication apparatus 900 may be configured to interact with a terminal device, and send information to the terminal device or receive information from the terminal device.

In a possible implementation, the communication apparatus 900 may be used for a core network element (such as an SMF or a UDM). For example, the communication apparatus 900 may be a core network element, or may be an apparatus that can support the core network element in implementing a function of the core network element in any one of the foregoing embodiments. The memory 920 stores a computer program (or instructions) and/or data for implementing the function of the core network element in any one of the foregoing embodiments. The processor 910 may execute the computer program stored in the memory 920, to complete the method performed by the core network element in any one of the foregoing embodiments. When the communication apparatus 900 is used for the core network element, the communication interface in the communication apparatus 900 may be configured to interact with an access network device and another core network element, send information to the access network device and the another core network element, or receive information from the access network device and the another core network element.

In another possible implementation, the communication apparatus 900 may be used for a terminal device. For example, the communication apparatus 900 may be a terminal device, or may be an apparatus that can support the terminal device in implementing a function of the terminal device in any one of the foregoing embodiments. The memory 920 stores a computer program (or instructions) and/or data for implementing the function of the terminal device in any one of the foregoing embodiments. The processor 910 may execute the computer program stored in the memory 920, to complete the method performed by the terminal device in any one of the foregoing embodiments. When the communication apparatus 900 is used for the terminal device, the communication interface in the communication apparatus 900 may be configured to interact with an access network device, and send information to the access network device or receive information from the access network device.

The communication apparatus 900 provided in this embodiment may be used for the access network device to complete the method performed by the access network device, or may be used in the terminal device to complete the method performed by the terminal device. Therefore, for technical effect that can be achieved by the communication apparatus 900, refer to the foregoing method examples. Details are not described herein again.

Based on the foregoing embodiments, an embodiment of this application provides a communication system, including an access network device and a terminal device. The access network device and the terminal device may implement the methods provided in the embodiments shown in FIG. 3 to FIG. 7.

All or some of the technical solutions provided in embodiments of this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, without logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, comprising:
receiving, by an access network device in a network, a user plane security policy from a session management function network element in the network, wherein the user plane security policy corresponds to a session of a terminal device; and
when the user plane security policy indicates preferred, determining, by the access network device based on energy information corresponding to the terminal device, whether to activate security protection for a data radio bearer, wherein the data radio bearer belongs to the session, and
the energy information indicates energy consumed by the network to transmit data of the terminal device, or the energy information indicates energy efficiency corresponding to transmission of data of the terminal device by the network.

2. The method according to claim 1, wherein the energy information comprises energy information corresponding to the session, the energy consumed by the network to transmit data of the terminal device comprises energy consumed by the network to transmit data of the session, and the energy efficiency corresponding to transmission of data of the terminal device by the network comprises energy efficiency corresponding to transmission of data of the session by the network.

3. The method according to claim 1 or 2, further comprising:
receiving, by the access network device, the energy information from a first network element.

4. The method according to any one of claims 1 to 3, wherein the determining, by the access network device based on the energy information corresponding to the terminal device, whether to activate security protection for the data radio bearer comprises:
when the energy information meets a first condition, determining, by the access network device, not to activate security protection for the data radio bearer, wherein
the energy information indicates the energy consumed by the network to transmit data of the terminal device, the first condition indicates that a difference between the consumed energy and an energy limit is less than or equal to a first threshold, and the energy limit indicates a maximum value of energy used by the network to transmit data of the terminal device; or
the energy information indicates the energy consumed by the network to transmit data of the terminal device, and the first condition indicates that a ratio of the consumed energy to the energy limit is greater than or equal to a second threshold; or
the energy information indicates the energy consumed by the network to transmit data of the terminal device, and the first condition indicates that the consumed energy is greater than or equal to a third threshold; or
the energy information indicates the energy efficiency corresponding to transmission of data of the terminal device by the network, and the first condition indicates that the energy efficiency is less than or equal to a fourth threshold.

5. The method according to claim 4, further comprising:
receiving first information from the session management function network element, wherein the first information indicates the energy limit.

6. A communication method, comprising:
obtaining, by a session management function network element in a network, energy information corresponding to a terminal device, wherein the energy information indicates energy consumed by the network to transmit data of the terminal device, or the energy information indicates energy efficiency corresponding to transmission of data of the terminal device by the network; and
sending, by the session management function network element, a first message to an access network device in the network based on the energy information, wherein the first message is used to determine whether to activate security protection for a data radio bearer, and the data radio bearer belongs to a session of the terminal device.

7. The method according to claim 6, wherein before the obtaining, by the session management function network element in the network, the energy information corresponding to the terminal device, the method further comprises:
receiving, by the session management function network element, a first user plane security policy from a unified data management network element, wherein the first user plane security policy corresponds to the session of the terminal device; and
the sending, by the session management function network element, the first message to the access network device in the network based on the energy information corresponding to the terminal device comprises:
when the first user plane security policy indicates preferred, sending, by the session management function network element, the first message to the access network device based on the energy information.

8. The method according to claim 6 or 7, wherein the sending, by the session management function network element, the first message to the access network device in the network based on the energy information comprises:
when the energy information meets a first condition, sending, by the session management function network element, the first message to the access network device, wherein the first message is used to determine not to activate security protection for the data radio bearer, wherein
the energy information indicates the energy consumed by the network to transmit data of the terminal device, the first condition indicates that a difference between the consumed energy and an energy limit is less than or equal to a first threshold, and the energy limit indicates a maximum value of energy used by the network to transmit data of the terminal device; or
the energy information indicates the energy consumed by the network to transmit data of the terminal device, and the first condition indicates that a ratio of the consumed energy to the energy limit is greater than or equal to a second threshold; or
the energy information indicates the energy consumed by the network to transmit data of the terminal device, and the first condition indicates that the consumed energy is greater than or equal to a third threshold; or
the energy information indicates the energy efficiency corresponding to transmission of data of the terminal device by the network, and the first condition indicates that the energy efficiency is less than or equal to a fourth threshold.

9. The method according to claim 8, wherein the first message comprises a second user plane security policy, and the second user plane security policy indicates that security protection corresponding to the session does not need to be activated.

10. The method according to claim 9, wherein before the sending, by the session management function network element, the first message, the method further comprises:
determining, by the session management function network element, that security protection for the data radio bearer is activated.

11. The method according to claim 8, wherein the first message comprises the first user plane security policy and third information, the third information indicates that the energy information corresponding to the terminal device meets the first condition, the first user plane security policy is from the unified data management network element, and the first user plane security policy corresponds to the session of the terminal device.

12. The method according to any one of claims 6 to 10, wherein the energy information comprises energy information corresponding to the session, the energy consumed by the network to transmit data of the terminal device comprises energy consumed by the network to transmit data of the session, and the energy efficiency corresponding to transmission of data of the terminal device by the network comprises energy efficiency corresponding to transmission of data of the session by the network.

13. A communication method, comprising:
receiving, by an access network device in a network, a first message from a session management function network element in the network, wherein the first message comprises a first user plane security policy and third information, the first user plane security policy corresponds to a session of a terminal device, the first user plane security policy indicates preferred, and the third information indicates that energy information corresponding to the terminal device meets a first condition, wherein
the energy information indicates energy consumed by the network to transmit data of the terminal device, the first condition indicates that a difference between the consumed energy and an energy limit is less than or equal to a first threshold, and the energy limit indicates a maximum value of energy used by the network to transmit data of the terminal device; or
the energy information indicates the energy consumed by the network to transmit data of the terminal device, and the first condition indicates that a ratio of the consumed energy to the energy limit is greater than or equal to a second threshold; or
the energy information indicates the energy consumed by the network to transmit data of the terminal device, and the first condition indicates that the consumed energy is greater than or equal to a third threshold; or
the energy information indicates energy efficiency corresponding to transmission of data of the terminal device by the network, and the first condition indicates that the energy efficiency is less than or equal to a fourth threshold; and
determining, by the access network device based on the first message, not to activate security protection for a data radio bearer, wherein the data radio bearer belongs to the session.

14. A communication method, comprising:
determining, by a session management function network element in a network, that the network serves a terminal device in an energy-saving mode; and
sending, by the session management function network element, a first message to an access network device in the network, wherein the first message is used by the access network device to determine not to activate security protection for a data radio bearer, and the data radio bearer belongs to a session of the terminal device.

15. The method according to claim 14, wherein the determining, by the session management function network element in the network, that the network serves the terminal device in the energy-saving mode comprises:
receiving, by the session management function network element, fourth information, and determining, based on the fourth information, that the network serves the terminal device in the energy-saving mode, wherein
the fourth information indicates a network slice to enter an energy-saving state, and the network slice comprises the session of the terminal device; or the fourth information indicates the session management function network element to enter an energy-saving state, and a session managed by the session management function network element comprises the session of the terminal device; or the fourth information indicates the access network device to enter an energy-saving state, and the access network device serves the terminal device.

16. The method according to claim 14 or 15, wherein the first message comprises a user plane security policy corresponding to the session of the terminal device and fifth information, the user plane security policy indicates preferred, and the fifth information indicates that the network serves the terminal device in the energy-saving mode.

17. A communication method, comprising:
determining, by an access network device in a network, that the network serves a terminal device in an energy-saving mode; and
when a user plane security policy corresponding to a session of the terminal device indicates preferred, determining, by the access network device, not to activate security protection for a data radio bearer, wherein the data radio bearer belongs to the session.

18. The method according to claim 17, wherein the determining, by the access network device in the network, that the network serves the terminal device in the energy-saving mode comprises:
receiving, by the access network device, fourth information, and determining, based on the fourth information, that the network serves the terminal device in the energy-saving mode, wherein
the fourth information indicates a network slice to enter an energy-saving state, and the network slice comprises the session of the terminal device; or the fourth information indicates a session management function network element to enter an energy-saving state, and a session managed by the session management function network element comprises the session of the terminal device; or the fourth information indicates the access network device to enter an energy-saving state, and the access network device serves the terminal device.

19. A communication method, comprising:
sending, by a session management function network element in a network, a user plane security policy to an access network device in the network, wherein the user plane policy corresponds to a session of a terminal device; and
receiving, by the access network device, the user plane security policy from the session management function network element, and when the user plane security policy indicates preferred, determining, by the access network device based on energy information corresponding to the terminal device, whether to activate security protection for a data radio bearer of the session, wherein
the energy information corresponding to the terminal device indicates energy consumed by the network to transmit data of the terminal device, or the energy information corresponding to the terminal device indicates energy efficiency corresponding to transmission of data of the terminal device by the network.

20. A communication method, comprising:
obtaining, by a session management function network element in a network, energy information corresponding to a terminal device, wherein the energy information indicates energy consumed by the network to transmit data of the terminal device, or the energy information indicates energy efficiency corresponding to transmission of data of the terminal device by the network;
sending, by the session management function network element, a first message to an access network device in the network based on the energy information; and
determining, by the access network device based on the first message, whether to activate security protection for a data radio bearer, wherein the data radio bearer belongs to a session of the terminal device.

21. A communication method, comprising:
determining, by a session management function network element in a network, that the network serves a terminal device in an energy-saving mode;
sending, by the session management function network element, a first message to an access network device in the network; and
determining, by the access network device based on the first message, not to activate security protection for a data radio bearer, wherein the data radio bearer belongs to a session of the terminal device.

22. A communication system, comprising an access network device and a session management function network element, wherein
the access network device is configured to perform the method according to any one of claims 1 to 5; and
the session management function network element is configured to send a user plane security policy to the access network device.

23. A communication system, comprising an access network device and a session management function network element, wherein
the session management function network element is configured to perform the method according to any one of claims 6 to 12; and
the access network device is configured to determine, based on a first message, whether to activate security protection for a data radio bearer, wherein the data radio bearer belongs to a session of a terminal device.

24. A communication system, comprising an access network device and a session management function network element, wherein
the session management function network element is configured to perform the method according to any one of claims 14 to 16; and
the access network device is configured to determine, based on a first message, not to activate security protection for a data radio bearer, wherein the data radio bearer belongs to a session of a terminal device.

25. A communication apparatus, comprising a module configured to perform the method according to any one of claims 1 to 5, a module configured to perform the method according to any one of claims 6 to 12, a module configured to perform the method according to claim 13, a module configured to perform the method according to any one of claims 14 to 16, or a module configured to perform the method according to claim 17 or 18.

26. A communication apparatus, comprising:
a processor, wherein the processor is coupled to a memory, and the processor is configured to invoke computer program instructions stored in the memory, to perform the method according to any one of claims 1 to 18.

27. A computer-readable storage medium, wherein the computer-readable storage medium stores instructions, and when the instructions are run on a computer, the computer is caused to perform the method according to any one of claims 1 to 18.

28. A computer program product, comprising instructions, wherein when the instructions are run on a computer, the computer is caused to perform the method according to any one of claims 1 to 18.
